(19) Europäisches Patentamt
European Patent Office
Office européen des brevets

(11) **EP 2 917 276 B1**

(12) **EUROPEAN PATENT SPECIFICATION**

(45) Date of publication and mention of the grant of the patent:
**18.07.2018 Bulletin 2018/29**

(21) Application number: **13853784.0**

(22) Date of filing: **06.11.2013**

(51) Int Cl.:
***C08L 23/06*** *(2006.01)* ***C08K 5/13*** *(2006.01)*
***C08K 5/49*** *(2006.01)* ***C08K 3/34*** *(2006.01)*

(86) International application number:
**PCT/US2013/068739**

(87) International publication number:
**WO 2014/074596 (15.05.2014 Gazette 2014/20)**

(54) **STABILIZED HIGH-DENSITY POLYETHYLENE COMPOSITION WITH IMPROVED RESISTANCE TO DETERIORATION AND STABILZER SYSTEM**

STABILISIERTE POLYETHYLENZUSAMMENSETZUNG VON HOHER DICHTE MIT ERHÖHTER ZERSETZUNGSBESTÄNDIGKEIT UND STABILISATORSYSTEM

COMPOSITION DE POLYÉTHYLÈNE HAUTE DENSITÉ STABILISÉ AYANT UNE RÉSISTANCE AMÉLIORÉE À LA DÉGRADATION ET SYSTÈME DE STABILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.11.2012 US 201213672222**

(43) Date of publication of application:
**16.09.2015 Bulletin 2015/38**

(73) Proprietor: **Equistar Chemicals LP**
**Houston, TX 77010 (US)**

(72) Inventors:
- **SHERMAN, Robert, L.**
  **Liberty Twp, OH 45011 (US)**
- **JOSEPH, Sebastian**
  **Mason, OH 45040 (US)**

(74) Representative: **Sacco, Marco**
**Equistar Chemicals, LP IP**
**Basell Poliolefine Italia S.r.l.**
**Intellectual Property**
**P.le Privato G. Donegani, 12**
**Casella Postale 19**
**44122 Ferrara (IT)**

(56) References cited:
**JP-A- H08 283 473**
**US-A1- 2005 009 967**
**US-A1- 2008 221 242**
**US-A1- 2008 293 856**
**US-A1- 2008 298 978**
**US-A1- 2009 186 987**
**US-A1- 2009 298 978**
**US-B1- 6 541 547**

- **DATABASE WPI Week 199702 Thomson Scientific, London, GB; AN 1997-017509 XP002757931, & JP H08 283473 A (YOSHITOMI PHARM IND KK) 29 October 1996 (1996-10-29)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

CROSS REFERENCE TO RELATED APPLICATIONS

This application claims benefit of priority of U.S. Patent Application No. 13/672,222 filed on November 8, 2012, the contents of which are incorporated herein by reference in its entirety.

FIELD OF THE DISCLOSURE

The disclosure relates to a high-density polyethylene (HDPE) composition with improved resistance especially to deterioration in the presence of chlorinated and non-chlorinated water at temperatures in the range of 0 °C to 100 °C. More particularly, the disclosure provides a HDPE composition which comprises a particular stabilizer system composed of a hindered phenol antioxidant, a phosphonite or phosphine antioxidant, and a natural or synthetic hydrotalcite. The stabilizer system is specifically tailored to protect the HDPE against degradation and to improve the oxidation induction time of the HDPE composition, thus prolonging the life expectancy of parts, such as pipes, which are molded from the HDPE composition. Additionally, the stabilizer system is suited to stabilize polyolefins other than HDPE against degradation due to exposure to chlorinated or non-chlorinated water of a temperature in the range of 0 °C to 100 °C.

BACKGROUND OF THE DISCLOSURE

The usability and lifetime of thermoplastic polyolefin pipes, geotextiles and other moldings which are in prolonged contact with water is influenced by numerous parameters including mechanical properties, density, molar mass and mass distribution of the polymer. Depending on the final use and the specific conditions during the use (temperature, stress, and environmental influences), a lifetime of up to several decades should be guaranteed. Moreover, when the intended use of the polyolefin pipes or moldings involves transport of water, special requirements must be fulfilled. To meet the requirements appropriate combinations of antioxidant(s) and/or stabilizer(s), so-called stabilizer systems, are added.

Stabilizer systems are added to polyolefin compositions to maintain long-term oxidative stability. Their efficiency depends on the compatibility of the involved antioxidant(s) and/or stabilizer(s), their solubility, as well as their mobility and their migration in the pipe resin. When the polyolefin compositions are used, for example, for water pipes, one or more of the antioxidant(s) and/or stabilizer(s) of the stabilizer systems can be depleted due to reaction with the disinfectants added to the water (e.g., chlorine, chlorine dioxide, chloramines) because the disinfectants can diffuse into the pipe wall. In order to maintain the long-term oxidative stability of the polyethylene pipe, it is desirable to lower the migration of the components of the stabilizer system to water and the migration of the disinfectants into the pipe.

The performance of a stabilizer system in a polyolefin composition can be evaluated under accelerated test conditions at elevated temperatures by hot water storage. The oxidation induction time (OIT) and the mechanical stability of the polyolefin composition are important technical criteria which are used to assess the stabilization of polyolefin pipes and other polyolefin-based molding materials. Oxidation induction time (OIT) is a differential scanning calorimetric method for determining how long it takes to fully consume the available antioxidants in a resin at an elevated temperature in the presence of oxygen. A higher OIT number is a measure of how well the stabilizer system protects a polymer against degradation. The OIT number can also be used to monitor the depletion of antioxidants from a polymer over time. This extent of depletion then can be correlated to the expected life of the resin. Certain resins, such as HDPE pipe resins, need to have extended life since a pipe's life expectancy may be 100 years.

Long-term thermal stability of pipe resins and other polyolefin molding materials can be achieved using sterically hindered phenols and sterically hindered amine stabilizers (HAS), e.g., U.S. Publication No. 2003/0073768, or using sterically hindered phenol and/or aromatic amine antioxidants in combination with organic phosphites or phosphonites, e.g., U.S. Patent No. 6,541,457, U.S. Publication No. 2006/0264540, U.S. Publication No. 2008/0221242.

However, there continues to be a need to improve the stabilizer systems which are used in HDPE compositions with regard to their long term stability, especially for use in HDPE compositions intended for applications in which the HDPE composition is in extended contact with extracting media, e.g., pipes. Correspondingly, there continues to be a need to further reduce problems due to stabilizer migration and hydrolysis. The HDPE compositions, stabilizer systems, and methods, disclosed herein have been found to address those needs.

SUMMARY OF THE DISCLOSURE

In a first aspect, the present disclosure relates to a high-density polyethylene (HDPE) composition in the form of a pipe having improved resistance to deterioration in the presence of chlorinated and non-chlorinated water at temperatures in the range of 0 °C to 100 °C and consisting essentially of:

a) the HDPE;
b) an effective amount of a hindered phenol antioxidant;
c) an effective amount of a phosphonite or phosphine antioxidant;
d) an effective amount of a co-stabilizing synthetic or natural hydrotalcite; and
e) optionally one or more additives different from components (b) to (d).

In a second aspect, the present disclosure provides for a HDPE composition in the form of a pipe in accordance with the foregoing aspect, which consists essentially of:

a) the HDPE;
b) from 0.05 to 0.5 %-wt., based on the weight of (a), of the hindered phenol antioxidant;
c) from 0.02 to 0.5 %-wt., based on the weight of (a), of the phosphonite or phosphine antioxidant;
d) from 0.01 to 1.0 %-wt., based on the weight of (a), of the co-stabilizing synthetic or natural hydrotalcite; and
e) optionally one or more additives different from components (b) to (d), in each case in amounts of from 0.01 to 3.0 %-wt., based on the weight of (a).

In a third aspect, the present disclosure provides for a HDPE composition in the form of a pipe in accordance with either one the foregoing aspects, wherein the HDPE (a) meets at least one of the following provisions ($a_1$) to ($a_3$):

$a_1$) the HDPE has a molecular weight distribution which is at least bimodal; and/or
$a_2$) the HDPE has a density of $\geq$ 0.946 g/cm$^3$, a HLMI of $\leq$ 20 g/10 min.; and/or
$a_3$) the HDPE has at least one polyethylene resin fraction having a density of $\geq$ 0.965 g/cm$^3$ and an $MI_2$ of from 50-400 g/10 min.

In a fourth aspect, the present disclosure provides for a HDPE composition in the form of a pipe in accordance with any one the foregoing aspects, wherein the hindered phenol antioxidant (b) is a hindered phenol of formula (I)

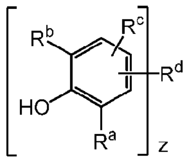

(I)

wherein

z is an integer from 1 to 4;
$R^a$ is a secondary or tertiary $C_3$-$C_6$-alkyl group, a $C_3$-$C_6$-cycloalkyl group, or a phenyl group;
$R^b$ is hydrogen, a $C_1$-$C_6$-alkyl group, a $C_3$-$C_6$-cycloalkyl group, or a phenyl group;
$R^c$ is hydrogen or a $C_1$-$C_6$-alkyl group, and
$R^d$ is $(CH_2)_2$-$CO_2$-$C_{18}H_{37}$ (z = 1) or is one of the polyvalent radicals $R^{d1}$ to $R^{d10}$:

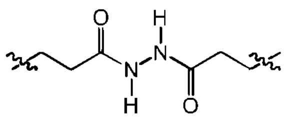

($R^{d1}$) z = 2

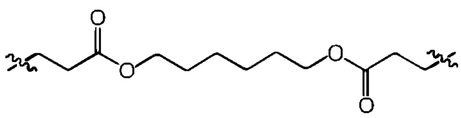

($R^{d2}$) z = 2

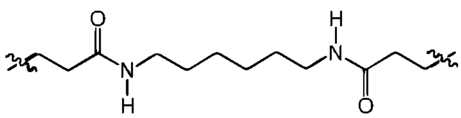

($R^{d3}$) z = 2

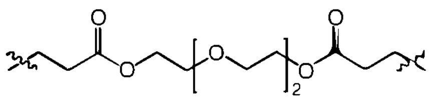

$(R^{d4})$ $z = 2$

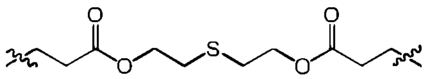

$(R^{d5})$ $z = 2$

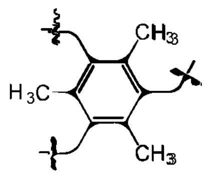

$(R^{d6})$ $z = 3$

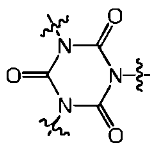

$(R^{d7})$ $z = 3$

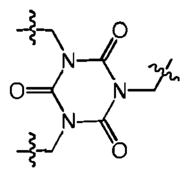

$(R^{d8})$ $z = 3$

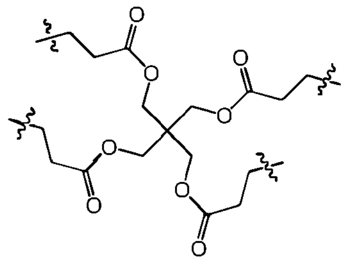

$(R^{d9})$ $z = 4$

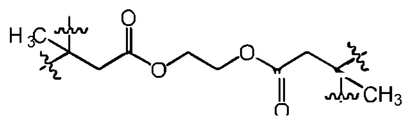

$(R^{d10})$ $z = 4$.

In a fifth aspect, the present disclosure provides for a HDPE composition in the form of a pipe in accordance with either one the foregoing aspects, wherein the phosphonite or phosphine antioxidant (c) is a phosphonite or phosphine of formula (II)

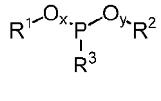

(II)

wherein

x and y, independently of one another, are 0 or 1;

$R^1$ and $R^2$, independently of one another, are unsubstituted or alkyl-substituted aryl groups; and

$R^3$ is an aryl group which is unsubstituted or which carries one or more alkyl groups and/or a-$P[O_mR^4]_2$ group wherein

each m independently is 0 or 1, and each $R^4$ independently is an unsubstituted or alkyl-substituted aryl group.

In a sixth aspect, the present disclosure provides for a HDPE compositionin the form of a pipe in accordance with either one the foregoing aspects, wherein the hydrotalcite (c) is a mixed hydroxide of formula (IIIa) or (IIIb)

$$M^{2+}{}_{1-a}M^{3+}{}_{a}(OH)_2(A^{b-})_{a/b}\times cH_2O \qquad \text{(IIIa)}$$

$$M^{2+}{}_{d}Al^{3+}{}_{2}(OH)_{2d+6-eb}(A^{b-})_{e}\times fH_2O \qquad \text{(IIIb)}$$

wherein

$M^{2+}$ is $Ca^{2+}$, $Mg^{2+}$, $Sr^{2+}$, $Ba^{2+}$, $Zn^{2+}$, $Pb^{2+}$, $Sn^{2+}$, or $Ni^{2+}$,
$M^{3+}$ is $Al^{3+}$, $B^{3+}$, or $Bi^{3+}$,
a is a number up to 0.5;
$A^b$ is an anion of valency b;
b is an integer from 1 to 4;
c is zero or a number up to 2;
d is a number up to 6;
e is a number up to 2; and
f is zero or a number up to 15.

In a seventh aspect, the present disclosure provides for a HDPE composition in the form of a pipe m accordance with either one the foregoing aspects which comprises one or more additives (e) selected from the group consisting of UV absorbers, light stabilizers, metal deactivators, peroxide scavengers, polyamide stabilizers, basic co-stabilizers, nucleating agents, fillers, reinforcing agents, aminoxy propanoate derivatives, lubricants, pigments, optical brighteners, anti-static agents, processing aids, tracers, waxes, melt strength enhancers, and anti-scratch additives.

In an eighth aspect, the present disclosure provides for a HDPE composition in the form of a pipe m accordance with either one the foregoing aspects which is essentially free of amine antioxidants.

In a ninth aspect, the present disclosure provides for a HDPE composition in accordance with either one the foregoing aspects 1 which is essentially free of amine stabilizers.

In a tenth aspect, the present disclosure provides for a pipe for carrying potable chlorinated or non-chlorinated water of a temperature in the range of 0 °C to 100 °C and consisting essentially of the HDPE composition in accordance with either one the foregoing aspects.

In an eleventh aspect, the present disclosure provides for a pipe for carrying potable chlorinated or non-chlorinated water of a temperature in the range of 0 °C to 100 °C having two or more layers including one innermost polymer layer wherein the innermost polymer layer consists essentially of the HDPE composition in accordance with either one the foregoing aspects.

In an additional aspect of the present invention, the HDPE composition may be in the form of an article used in a piping system, including but not limited to a pipe, an elbow, a tee, a wye, a reducer, a flange adaptor, an anchor ring, a valve, an end cap, a tap and/or a thrust collar. Essentially, the HDPE composition can be formed into any of these articles either by injection, fabrication or machining from extruded pipe or billet stock.

BRIEF DESCRIPTION OF THE DRAWINGS

For a more complete understanding of the present invention, reference is now made to the following descriptions taken in conjunction with the accompanying drawing.

Figure 1 shows aging data for a comparative HDPE composition and a HDPE composition in accordance with the present disclosure over a period of 26 weeks.
Figure 2 shows the predicted OIT retention based on the data for Figure 1.
Figure 3 shows aging data for a comparative HDPE composition and a HDPE composition in accordance with the present disclosure over a period of 8 weeks.
Figure 4 shows the impact of accelerated aging on the molecular weight distribution of a comparative HDPE composition over a period of 20 weeks.
Figure 5 shows the impact of accelerated aging on the molecular weight distribution of a HDPE composition in accordance with the present disclosure over a period of 20 weeks.

DETAILED DESCRIPTION

A detailed description of embodiments of the HDPE composition, the stabilizer system, and the methods, is disclosed herein. However, it is to be understood that the disclosed embodiments are merely exemplary of the compositions, systems and methods, and that the compositions, systems and methods may be embodied in various and alternative forms of the disclosed embodiments. Therefore, specific procedural, structural and functional details which are addressed in the embodiments disclosed herein are not to be interpreted as limiting, but merely as a basis for the claims and as a representative basis for teaching one skilled in the art to variously employ the compositions, systems and methods.

Unless specifically stated otherwise, all technical terms used herein have the meaning as commonly understood by those skilled in the art.

Moreover, unless specifically stated otherwise, the following expressions as used herein are understood to have the following meanings.

As used herein, "hydrogen" means -H; "hydroxy" means -OH; "oxo" means =O; "halo" means independently -F, -Cl, -Br or -I; "amino" means $-NH_2$ (see below for definitions of groups containing the term amino, *e.g.,* alkylamino); "hydroxyamino" means -NHOH; "nitro" means $-NO_2$; imino means =NH (see below for definitions of groups containing the term imino, *e.g.,* alkylamino); "cyano" means -CN; "azido" means $-N_3$; "mercapto" means -SH; "thio" means =S; "sulfonamido" means $-NHS(O)_2-$ (see below for definitions of groups containing the term sulfonamido, *e.g.,* alkylsulfonamido); "sulfonyl" means $-S(O)_2-$ (see below for definitions of groups containing the term sulfonyl, *e.g.,* alkylsulfonyl); and "silyl" means $-SiH_3$ (see below for definitions of group(s) containing the term silyl, *e.g.,* alkylsilyl).

For the groups below, the following parenthetical subscripts further define the groups as follows: "(Cn)" defines the exact number (n) of carbon atoms in the group; "(C≤n)" defines the maximum number (n) of carbon atoms that can be in the group; (Cn-n') defines both the minimum (n) and maximum number (n') of carbon atoms in the group. For example, "$\text{alkoxy}_{(C\leq 10)}$" designates those alkoxy groups having from 1 to 10 carbon atoms (*e.g.,* 1, 2, 3, 4, 5, 6, 7, 8, 9, or 10, or any range derivable therein (*e.g.,* 3-10 carbon atoms)). Similarly, "$\text{alkyl}_{(C2-10)}$" designates those alkyl groups having from 2 to 10 carbon atoms (*e.g.,* 2, 3, 4, 5, 6, 7, 8, 9, or 10, or any range derivable therein (*e.g.*, 3-10 carbon atoms)).

The symbol "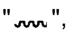", when drawn perpendicularly across a bond indicates a point of attachment of the group. It is noted that the point of attachment is typically only identified in this manner for larger groups in order to assist the reader in rapidly and unambiguously identifying a point of attachment.

The term "alkyl" when used without the "substituted" modifier refers to a non-aromatic monovalent group with a saturated carbon atom as the point of attachment, a linear or branched, cyclo, cyclic or acyclic structure, no carbon-carbon double or triple bonds, and no atoms other than carbon and hydrogen. The groups, $-CH_3$ (Me), $-CH_2CH_3$ (Et), $-CH_2CH_2CH_3$ (*n*-Pr), $-CH(CH_3)_2$ (*iso*-Pr), $-CH(CH_2)_2$ (cyclopropyl), $-CH_2CH_2CH_2CH_3$ (*n*-Bu), $-CH(CH_3)CH_2CH_3$ (*sec*-butyl), $-CH_2CH(CH_3)_2$ (*iso*-butyl), $-C(CH_3)_3$ (*tert*-butyl), $-CH_2C(CH_3)_3$ (*neo*-pentyl), cyclobutyl, cyclopentyl, cyclohexyl, and cyclohexylmethyl are non-limiting examples of alkyl groups. The term "substituted alkyl" refers to a non-aromatic monovalent group with a saturated carbon atom as the point of attachment, a linear or branched, cyclo, cyclic or acyclic structure, no carbon-carbon double or triple bonds, and at least one atom independently selected from the group consisting of N, O, F, Cl, Br, I, Si, P, and S. The following groups are non-limiting examples of substituted alkyl groups: $-CH_2OH$, $-CH_2Cl$, $-CH_2Br$, $-CH_2SH$, $-CF_3$, $-CH_2CN$, $-CH_2C(O)H$, $-CH_2C(O)OH$, $-CH_2C(O)OCH_3$, $-CH_2C(O)NH_2$, $-CH_2C(O)NHCH_3$, $-CH_2C(O)CH_3$, $-CH_2OCH_3$, $-CH_2OCH_2CF_3$, $-CH_2OC(O)CH_3$, $-CH_2NH_2$, $-CH_2NHCH_3$, $-CH_2N(CH_3)_2$, $-CH_2CH_2Cl$, $-CH_2CH_2OH$, $-CH_2CF_3$, $-CH_2CH_2OC(O)CH_3$, $-CH_2CH_2NHCO_2C(CH_3)_3$, and $-CH_2Si(CH_3)_3$.

The term "alkanediyl" when used without the "substituted" modifier refers to a non-aromatic divalent group, wherein the alkanediyl group is attached with two σ-bonds, with one or two saturated carbon atom(s) as the point(s) of attachment, a linear or branched, cyclo, cyclic or acyclic structure, no carbon-carbon double or triple bonds, and no atoms other than carbon and hydrogen. The groups, $-CH_2-$ (methylene), $-CH_2CH_2-$, $-CH_2C(CH_3)_2CH_2-$, $-CH_2CH_2CH_2-$, and

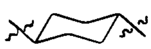,

are non-limiting examples of alkanediyl groups. The term "substituted alkanediyl" refers to a non-aromatic monovalent group, wherein the alkynediyl group is attached with two σ-bonds, with one or two saturated carbon atom(s) as the point(s) of attachment, a linear or branched, cyclo, cyclic or acyclic structure, no carbon-carbon double or triple bonds, and at least one atom independently selected from the group consisting of N, O, F, Cl, Br, I, Si, P, and S. The following groups are non-limiting examples of substituted alkanediyl groups: -CH(F)-, $-CF_2-$, -CH(Cl)-, -CH(OH)-, $-CH(OCH_3)-$, and $-CH_2CH(Cl)-$.

The term "alkenyl" when used without the "substituted" modifier refers to a monovalent group with a nonaromatic

carbon atom as the point of attachment, a linear or branched, cyclo, cyclic or acyclic structure, at least one nonaromatic carbon-carbon double bond, no carbon-carbon triple bonds, and no atoms other than carbon and hydrogen. Non-limiting examples of alkenyl groups include: $-CH=CH_2$ (vinyl), $-CH=CHCH_3$, $-CH=CHCH_2CH_3$, $-CH_2CH=CH_2$ (allyl), $-CH_2CH=CHCH_3$, and $-CH=CH-C_6H_5$. The term "substituted alkenyl" refers to a monovalent group with a nonaromatic carbon atom as the point of attachment, at least one nonaromatic carbon-carbon double bond, no carbon-carbon triple bonds, a linear or branched, cyclo, cyclic or acyclic structure, and at least one atom independently selected from the group consisting of N, O, F, Cl, Br, I, Si, P, and S. The groups, -CH=CHF, -CH=CHCl and -CH=CHBr, are non-limiting examples of substituted alkenyl groups.

The term "alkenediyl" when used without the "substituted" modifier refers to a non-aromatic divalent group, wherein the alkenediyl group is attached with two σ-bonds, with two carbon atoms as points of attachment, a linear or branched, cyclo, cyclic or acyclic structure, at least one nonaromatic carbon-carbon double bond, no carbon-carbon triple bonds, and no atoms other than carbon and hydrogen. The groups, -CH=CH-, $-CH=C(CH_3)CH_2-$, $-CH=CHCH_2-$, and

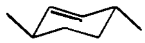,

are non-limiting examples of alkenediyl groups. The term "substituted alkenediyl" refers to a non-aromatic divalent group, wherein the alkenediyl group is attached with two σ-bonds, with two carbon atoms as points of attachment, a linear or branched, cyclo, cyclic or acyclic structure, at least one nonaromatic carbon-carbon double bond, no carbon-carbon triple bonds, and at least one atom independently selected from the group consisting of N, O, F, Cl, Br, I, Si, P, and S. The following groups are non-limiting examples of substituted alkenediyl groups: -CF=CH-, -C(OH)=CH-, and $-CH_2CH=C(Cl)-$.

The term "alkynyl" when used without the "substituted" modifier refers to a monovalent group with a nonaromatic carbon atom as the point of attachment, a linear or branched, cyclo, cyclic or acyclic structure, at least one carbon-carbon triple bond, and no atoms other than carbon and hydrogen. The groups, -C≡CH, $-C{\equiv}CCH_3$, $-C{\equiv}CC_6H_5$ and $-CH_2C{\equiv}CCH_3$, are non-limiting examples of alkynyl groups. The term "substituted alkynyl" refers to a monovalent group with a nonaromatic carbon atom as the point of attachment and at least one carbon-carbon triple bond, a linear or branched, cyclo, cyclic or acyclic structure, and at least one atom independently selected from the group consisting of N, O, F, Cl, Br, I, Si, P, and S. The group, $-C{\equiv}CSi(CH_3)_3$, is a non-limiting example of a substituted alkynyl group.

The term "alkynediyl" when used without the "substituted" modifier refers to a non-aromatic divalent group, wherein the alkynediyl group is attached with two σ-bonds, with two carbon atoms as points of attachment, a linear or branched, cyclo, cyclic or acyclic structure, at least one carbon-carbon triple bond, and no atoms other than carbon and hydrogen. The groups, -C≡C-, $-C{\equiv}CCH_2-$, and $-C{\equiv}CCH(CH_3)-$ are non-limiting examples of alkynediyl groups. The term "substituted alkynediyl" refers to a non-aromatic divalent group, wherein the alkynediyl group is attached with two σ-bonds, with two carbon atoms as points of attachment, a linear or branched, cyclo, cyclic or acyclic structure, at least one carbon-carbon triple bond, and at least one atom independently selected from the group consisting of N, O, F, Cl, Br, I, Si, P, and S. The groups -C≡CCFH- and -C≡CHCH(Cl)- are non-limiting examples of substituted alkynediyl groups.

The term "aryl" when used without the "substituted" modifier refers to a monovalent group with an aromatic carbon atom as the point of attachment, said carbon atom forming part of a six-membered aromatic ring structure wherein the ring atoms are all carbon, and wherein the monovalent group consists of no atoms other than carbon and hydrogen. Non-limiting examples of aryl groups include phenyl (Ph), methylphenyl, (dimethyl)phenyl, $-C_6H_4CH_2CH_3$ (ethylphenyl), $-C_6H_4CH_2CH_2CH_3$ (propylphenyl), $-C_6H_4CH(CH_3)_2$, $-C_6H_4CH(CH_2)_2$, $-C_6H_3(CH_3)CH_2CH_3$ (methylethylphenyl), $-C_6H_4CH=CH_2$ (vinylphenyl), $-C_6H_4CH=CHCH_3$, $-C_6H_4C{\equiv}CH$, $-C_6H_4C{\equiv}CCH_3$, naphthyl, and the monovalent group derived from biphenyl. The term "substituted aryl" refers to a monovalent group with an aromatic carbon atom as the point of attachment, said carbon atom forming part of a six-membered aromatic ring structure wherein the ring atoms are all carbon, and wherein the monovalent group further has at least one atom independently selected from the group consisting of N, O, F, Cl, Br, I, Si, P, and S. Non-limiting examples of substituted aryl groups include the groups: $-C_6H_4F$, $-C_6H_4Cl$, $-C_6H_4Br$, $-C_6H_4I$, $-C_6H_4OH$, $-C_6H_4OCH_3$, $-C_6H_4OCH_2CH_3$, $-C_6H_4OC(O)CH_3$, $-C_6H_4NH_2$, $-C_6H_4NHCH_3$, $-C_6H_4N(CH_3)_2$, $-C_6H_4CH_2OH$, $-C_6H_4CH_2OC(O)CH_3$, $-C_6H_4CH_2NH_2$, $-C_6H_4CF_3$, $-C_6H_4CN$, $-C_6H_4CHO$, $-C_6H_4CHO$, $-C_6H_4C(O)CH_3$, $-C_6H_4C(O)C_6H_5$, $-C_6H_4CO_2H$, $-C_6H_4CO_2CH_3$, $-C_6H_4CONH_2$, $-C_6H_4CONHCH_3$, and $-C_6H_4CON(CH_3)_2$.

The term "aralkyl" when used without the "substituted" modifier refers to the monovalent group -alkanediyl-aryl, in which the terms alkanediyl and aryl are each used in a manner consistent with the definitions provided above. Non-limiting examples of aralkyls are: phenylmethyl (benzyl, Bn), 1-phenyl-ethyl, 2-phenyl-ethyl, indenyl and 2,3-dihydro-indenyl, provided that indenyl and 2,3-dihydro-indenyl are only examples of aralkyl in so far as the point of attachment in each case is one of the saturated carbon atoms. When the term "aralkyl" is used with the "substituted" modifier, either one or both the alkanediyl and the aryl is substituted. Non-limiting examples of substituted aralkyls are: (3-chlorophenyl)-methyl, 2-oxo-2-phenyl-ethyl (phenylcarbonylmethyl), 2-chloro-2-phenyl-ethyl, chromanyl where the point of attachment is one of the saturated carbon atoms, and tetrahydroquinolinyl where the point of attachment is one of the saturated atoms.

The term "heteroaryl" when used without the "substituted" modifier refers to a monovalent group with an aromatic carbon atom or nitrogen atom as the point of attachment, said carbon atom or nitrogen atom forming part of an aromatic ring structure wherein at least one of the ring atoms is nitrogen, oxygen or sulfur, and wherein the monovalent group consists of no atoms other than carbon, hydrogen, aromatic nitrogen, aromatic oxygen and aromatic sulfur. Non-limiting examples of aryl groups include acridinyl, furanyl, imidazoimidazolyl, imidazopyrazolyl, imidazopyridinyl, imidazopyrimidinyl, indolyl, indazolinyl, methylpyridyl, oxazolyl, phenylimidazolyl, pyridyl, pyrrolyl, pyrimidyl, pyrazinyl, quinolyl, quinazolyl, quinoxalinyl, tetrahydroquinolinyl, thienyl, triazinyl, pyrrolopyridinyl, pyrrolopyrimidinyl, pyrrolopyrazinyl, pyrrolotriazinyl, pyrroloimidazolyl, chromenyl (where the point of attachment is one of the aromatic atoms), and chromanyl (where the point of attachment is one of the aromatic atoms). The term "substituted heteroaryl" refers to a monovalent group with an aromatic carbon atom or nitrogen atom as the point of attachment, said carbon atom or nitrogen atom forming part of an aromatic ring structure wherein at least one of the ring atoms is nitrogen, oxygen or sulfur, and wherein the monovalent group further has at least one atom independently selected from the group consisting of non-aromatic nitrogen, non-aromatic oxygen, non aromatic sulfur F, Cl, Br, I, Si, and P.

The term "alkoxy" when used without the "substituted" modifier refers to the group -OR, in which R is an alkyl, as that term is defined above. Non-limiting examples of alkoxy groups include: $-OCH_3$, $-OCH_2CH_3$, $-OCH_2CH_2CH_3$, $-OCH(CH_3)_2$, $-OCH(CH_2)_2$, -O-cyclopentyl, and -O-cyclohexyl. The term "substituted alkoxy" refers to the group -OR, in which R is a substituted alkyl, as that term is defined above. For example, $-OCH_2CF_3$ is a substituted alkoxy group.

Similarly, the terms "alkenyloxy", "alkynyloxy", "aryloxy", "aralkoxy", "heteroaryloxy", "heteroaralkoxy" and "acyloxy", when used without the "substituted" modifier, refers to groups, defined as -OR, in which R is alkenyl, alkynyl, aryl, aralkyl, heteroaryl, heteroaralkyl and acyl, respectively, as those terms are defined above. When any of the terms alkenyloxy, alkynyloxy, aryloxy, aralkyloxy and acyloxy is modified by "substituted," it refers to the group -OR, in which R is substituted alkenyl, alkynyl, aryl, aralkyl, heteroaryl, heteroaralkyl and acyl, respectively.

In addition, atoms making up the compounds of the present invention are intended to include all isotopic forms of such atoms. Isotopes, as used herein, include those atoms having the same atomic number but different mass numbers. By way of general example and without limitation, isotopes of hydrogen include tritium and deuterium, and isotopes of carbon include $^{13}C$ and $^{14}C$. Similarly, it is contemplated that one or more carbon atom(s) of a compound of the present invention may be replaced by a silicon atom(s). Further, it is contemplated that any oxygen atom discussed in any compound herein may be replaced by a sulfur or selenium atom.

A compound having a formula that is represented with a dashed bond is intended to include the formulae optionally having zero, one or more double bonds. Thus, for example, the structure

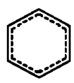

includes the structures

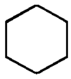, 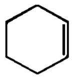, 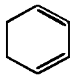, 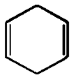 and 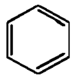.

As will be understood by a person of skill in the art, no one such ring atom forms part of more than one double bond.

Any undefined valency on an atom of a structure shown in this application implicitly represents a hydrogen atom bonded to the atom.

A ring structure shown with an unconnected "R" group, indicates that any implicit hydrogen atom on that ring can be replaced with that R group. In the case of a divalent R group (*e.g.,* oxo, imino, thio, alkylidene, etc.), any pair of implicit hydrogen atoms attached to one atom of that ring can be replaced by that R group. This concept is as exemplified below:

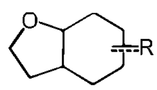

represents

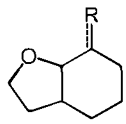, 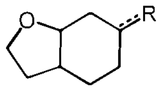, 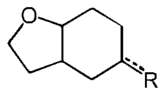, or 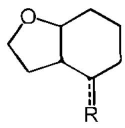.

The use of the word "a" or "an," when used in conjunction with the term "comprising" in the claims and/or the specification may mean "one," but it is also consistent with the meaning of "one or more," "at least one," and "one or more than one."

Throughout this application, the term "" is used to indicate that a value includes the inherent variation of error for the device, the method being employed to determine the value, or the variation that exists among the study subjects.

The terms "comprise," "have" and "include" are open-ended linking verbs. Any forms or tenses of one or more of these verbs, such as "comprises," "comprising," "has," "having," "includes" and "including," are also open-ended. For example, any method that "comprises," "has" or "includes" one or more steps is not limited to possessing only those one or more steps and also covers other unlisted steps.

The term "effective," as that term is used in the specification and/or claims, means adequate to accomplish a desired, expected, or intended result.

The reference to 'water at temperatures in the range of 0 °C to 100 °C' as used herein is a reference to water in the liquid state. Those having ordinary skill in the art will appreciate that the melting point and boiling point of water may be influenced by disinfectants, salts and impurities, as well as pressure conditions, and that water therefore may be in the liquid state below 0 °C and above 100 °C.

The expression 'HLMI' (high load melt index) as used herein refers to the melt index (MI) determined at 190 °C and a load of 21.6 kg in accordance with ASTM D 1238. The standard method measures the ease of flow of the melt of a polymer by measuring the rate of extrusion of the molten polymer through a die of a specified length and diameter under prescribed conditions of temperature, load, and piston position in the barrel as the timed measurement is being made. It is defined as the mass of polymer, in grams, flowing in ten minutes through a capillary of a specific diameter and length by a pressure applied via prescribed alternative gravimetric weights for alternative prescribed temperatures.

The expression '$MI_2$' as used herein refers to the melt index (MI) determined at 190 °C and a load of 2.16 kg in accordance with ASTM D 1238.

The expressions 'unimodal', 'bimodal' and 'multimodal' as used herein regarding the HDPE refer to the structure of the molecular-weight distribution of the HDPE, i.e. the appearance of the curve indicating the number of molecules as a function of the molecular weight. If the curve exhibits one maximum, the HDPE is referred to as "unimodal", whereas if the curve exhibits a very broad maximum or two or more maxima and the HDPE consists of two or more fractions, the HDPE is referred to as 'bimodal' or 'multimodal'. HDPE which consist of two or more fractions and whose molecular-weight-distribution curve is very broad or has two or more maxima herein may be jointly referred to as 'multimodal'.

The expression 'HDPE fraction' as used herein refers to a HDPE as obtained in a single reaction zone under set reaction conditions and using a single catalyst. Those having ordinary skill in the art will appreciate that two or more HDPE fractions may be produced in various ways, e.g., by conducting the polymerization in a single reaction zone under varying reaction conditions and/or using multiple catalysts, or by conducting the polymerization in multiple reaction zones using identical or different reaction conditions and/or using multiple catalysts.

The expression 'deterioration' as used herein with respect to the polyolefin or HDPE compositions refers to changes in the compositional makeup of the composition which are detrimental to the performance thereof. Compositional changes which may be detrimental to the performance include, in particular, the partial or complete loss of antioxidant(s) and/or stabilizer(s), and changes in the molecular weight distribution of the polyolefin or HDPE.

The expression 'degradation' as used herein with respect to the polyolefin or HDPE compositions refers to changes in the molecular weight distribution of the polyolefin or HDPE which are detrimental to the performance thereof. Those having ordinary skill in the art will appreciate that degradation may result from partial or complete loss of antioxidant(s) and/or stabilizer(s), and that the expressions 'deterioration' and 'degradation' are synonymous to a certain extent.

The expression 'organic radical' as used herein refers to a substituent of a compound wherein the substituent is based on carbon and hydrogen atoms and optionally further contains one or more heteroatoms selected from the group of oxygen, nitrogen, and sulfur.

The expression 'amine antioxidant' as used herein refers to a diaryl amine compound of formula $Ar^1$-NH-$Ar^2$ wherein each of $Ar^1$ and $Ar^2$, independently, represents an optionally substituted mono- or polycyclic aromatic hydrocarbon, e.g., phenyl or naphthyl.

The expression 'amine stabilizers' as used herein refers to a hindered amine compound comprising at least one 2,2,6,6-tetraalkylpiperidine moiety.

Unless specifically indicated otherwise, the expression "%-wt." as used herein refers to the percentage by weight of a particular component in the referenced composition.

With respect to all ranges disclosed herein, such ranges are intended to include any combination of the mentioned upper and lower limits even if the particular combination is not specifically listed.

All publications, patent applications, and patents mentioned herein are incorporated by reference in their entirety. In the event of conflict, the present specification, including definitions, is intended to control.

It has been found, surprisingly, that a high-density polyethylene (HDPE) composition which consists essentially of:

a) the HDPE;
b) an effective amount of a hindered phenol antioxidant;
c) an effective amount of a phosphonite or phosphine antioxidant;
d) an effective amount of a co-stabilizing synthetic or natural hydrotalcite; and
e) optionally one or more additives different from components (b) to (d);

exhibits significantly improved resistance against deterioration in the presence of chlorinated and non-chlorinated water at temperatures in the range of 0 °C to 100 °C. In particular, it has been found the particular combination of the HDPE (a) with the hindered phenol antioxidant (b), the phosphonite or phosphine antioxidant (c), and the hydrotalcite (d), yields a HDPE composition which exhibits improved retention of the OIT number. That is, the decline of the OIT number of the respective compositions over time is considerably lower than that of a HDPE composition which lacks one or more of the components (b), (c), and (d). These findings indicate that the life expectancy of a pipe or molding which is exposed to chlorinated and non-chlorinated water at temperatures in the range of 0 °C to 100 °C is significantly increased. Additionally, it has surprisingly been found that the particular stabilizer system composed of the antioxidants (b) and (c), and the hydrotalcite (d), is particularly well suited to prevent or at least reduce degradation of the molecular weight distribution of polyolefins in general and, in particular, the HDPE during use.

**A) The HDPE Component**

The HDPE component of the HDPE composition includes HDPE pipe resins, e.g., HDPEs which meet the requirements under ASTM D3350 "Standard Specification for Polyethylene Plastics Pipe and Fitting Materials." Such pipe resins are described, e.g., in U.S. Patent No. 7,230,054, U.S. Patent No. 7,193,017, U.S. Patent No. 7,129,296, U.S. Patent No. 7,037,977, U.S. Patent No. 7,034,092, U.S. Patent No. 6,946,521, U.S. Patent No. 6,878,784, U.S. Patent No. 6,867,278, U.S. Patent No. 6,787,608, U.S. Patent No. 6,770,341, U.S. Patent No. 6,566,450, U.S. Patent No. 6,525,148, and U.S. Patent No. 6,252,017.

Suitable HDPEs generally have a density of from 0.930 g/cm$^3$ to 0.975 g/cm$^3$, more preferably from 0.945 g/cm$^3$ to 0.955 g/cm$^3$. In some particular embodiments, the density of the HDPE is at least 0.946 g/cm$^3$. In further embodiments, the HDPE has a density of 0.947 g/cm$^3$ to 0.949 g/cm$^3$. In additional and/or preferred embodiments, the HDPE has a density range of 0.930 g/cm$^3$ to 0.967 g/cm$^3$ during production. In alternate embodiments, the HDPE has a nominal (target) density range of 0.947 g/cm$^3$ to 0.949 g/cm$^3$. In specific embodiments, the HDPE has a density of 0.941 g/cm$^3$. The HDPE typically has a HLMI of at most 20 g/10 min.

In particular embodiments, the HDPE component employed in the HDPE composition should meet at least one of the following provisions ($a_1$) to ($a_3$):

$a_1$) the HDPE has a molecular weight distribution which is at least bimodal; and/or
$a_2$) the HDPE has a density of $\geq$ 0.946 g/cm$^3$, a HLMI of $\leq$ 20 g/10 min.; and/or
$a_3$) the HDPE has at least one polyethylene resin fraction having a density of $\geq$ 0.965 g/cm$^3$ and an $MI_2$ of from 50-400 g/10 min.

In certain aspects of the embodiments disclosed herein, the HDPE component should meet provision ($a_1$) and one of provisions ($a_2$) and ($a_3$). In other aspects, the HDPE component should meet provision ($a_2$) and one of provisions ($a_1$) and ($a_3$). In further aspects, the HDPE component should meet provision ($a_3$) and one of provisions ($a_1$) and ($a_2$). In particular aspects, the HDPE component meets all of the provision ($a_1$) to ($a_3$).

Preferably, the HDPE is a multimodal polyethylene resin. More preferably, the HDPE is a bimodal or trimodal polyethylene resin.

In some embodiments, the HDPE is a bimodal resin as disclosed in U.S. Publication No. 2009/0304966 or U.S. Publication No. 2010/0092709. Such bimodal resins are preferably made by a multi-reactor process which involves polymerizing ethylene in an inert hydrocarbon medium in a first reactor in the absence or substantial absence of comonomer in the presence of a catalyst system comprised of a high activity solid transition metal-containing catalyst and organoaluminum cocatalyst and hydrogen while maintaining conditions to produce a polymer fraction containing a first polyethylene fraction having a density of at least 0.965 g/cm$^3$ and $MI_2$ from 50 to 400 g/10 min. The polymer fraction is

preferably devolatilized to remove substantially all of the hydrogen from it, and it is then transferred to a second reactor wherein the polymerization continues by adding ethylene, a $C_{3-8}$ α-olefin comonomer and hydrogen to the second reactor, and copolymerizing the ethylene and α-olefin at a temperature from 70 to 85° C while maintaining the mole ratio of comonomer to ethylene in the vapor space from 0.02 to 0.15 and the mole ratio of hydrogen to ethylene in the vapor space from 0.01 to 0.10 to produce a second polyethylene fraction of relatively higher molecular weight and lower density than that of the first polyethylene fraction.

The bimodal resin product preferably has a density of from 0.947 to 0.949 g/cm$^3$ and a HLMI of from 3 g/10 min to 20 g/10 min. In some embodiments, the bimodal resin comprises from 49 to 60%-wt. of the first polyethylene fraction and from 40%-wt. to 51 %-wt. of the second polyethylene fraction. In preferred embodiments, the comonomer in the second reactor is butene-1.

In some embodiments, the HDPE is trimodal and comprises from 45 to 55%-wt. of a low molecular weight ethylene homopolymer fraction, from 20 to 40%-wt. of a medium molecular weight ethylene copolymer fraction, and from 15 to 30%-wt. of a high molecular weight ethylene copolymer fraction. In particular embodiments, the multimodal HDPE comprises from 30 to 40%-wt. of a low molecular weight, ethylene homopolymer fraction, from 30 to 40%-wt. of a medium molecular weight, ethylene copolymer fraction, and from 20 to 30%-wt. of a high molecular weight ethylene copolymer fraction.

Preferably, the low molecular weight ethylene homopolymer fraction has a density greater than 0.965 g/cm$^3$ and an $MI_2$ of from 50 g/10 min to 250 g/10 min, the medium molecular weight ethylene copolymer fraction has a density of from 0.945 g/cm$^3$ to 0.962 g/cm$^3$ and a melt index $MI_2$ of from 0.01 g/10 min to 1 g/10 min, and the high molecular weight ethylene copolymer fraction has a density of from 0.855 g/cm$^3$ to 0.949 g/cm$^3$ and a melt index $MI_2$ less than or equal to 0.01 g/10 min. More preferably, the low molecular weight ethylene homopolymer fraction has a density of from 0.965 g/cm$^3$ to 0.973 g/cm$^3$ and a melt index $MI_2$ of from 100 g/10 min to 250 g/10 min, the medium molecular weight ethylene copolymer fraction has a density of from 0.950 g/cm$^3$ to 0.962 g/cm$^3$ and a melt index $MI_2$ of from 0.01 g/10 min to 0.1 g/10 min, and the high molecular weight ethylene copolymer fraction has a density of from 0.905 g/cm$^3$ to 0.935 g/cm$^3$ and a melt index $MI_2$ less than or equal to 0.005 g/10 min.

Suitable comonomers for making the medium molecular weight ethylene copolymers and high molecular weight ethylene copolymers are preferably selected from $C_3$-$C_{10}$ α-olefins, for example, propylene, 1-butene, 1-pentene, 1-hexene, 1-octene, 4-methyl-1-pentene, the like, and mixtures thereof.

Methods for making trimodal polyethylene are known and described, e.g., in PCT Publication No. WO 2007/003530. A trimodal HDPE is preferably prepared in a continuous process with three reactors in series. An ethylene homopolymer fraction is made by slurry polymerization in a first reactor in the presence of a Ziegler catalyst, a solvent, and hydrogen. Suitable Ziegler catalysts include those known in the industry and described, e.g., in PCT Publication No. WO 91/18934. An example of a suitable Ziegler catalyst is titanium tetrachloride with triethylaluminum cocatalyst. The Ziegler catalyst is preferably suspended in a solvent. Preferred solvents are selected from $C_5$-$C_{12}$ alkanes and cycloalkanes, including hexane, cyclohexane, octane, the like, and mixtures thereof. Ethylene is preferably continuously fed into the catalyst slurry in the first reactor. The molecular weight or melt index $MI_2$ of the low molecular weight ethylene homopolymer fraction is controlled by the hydrogen concentration. Preferably, the hydrogen/ethylene ratio in the gas phase is from 9/1 to 1/9 by volume; more preferably, the hydrogen/ethylene ratio in the gas phase is from 1/1 to 5/1 by volume. The polymer slurry from the first reactor is preferably transferred to a second reactor. The polymer slurry is degassed to remove some of the hydrogen from the first reactor. Ethylene and α-olefin are fed to the second reactor and copolymerized to form a medium molecular weight, ethylene copolymer fraction. The ratio of α-olefin/ethylene depends on the desired density of the medium molecular weight, ethylene copolymer fraction. The more α-olefin is used, the lower density polymer is produced. The feed ratio of α-olefin/ethylene is preferably from 0.01 to 0.05 by weight. The polymer slurry from the second reactor is preferably transferred to a third reactor. The slurry is further degassed to remove hydrogen. Preferably, the third reactor is essentially hydrogen free. Ethylene and α-olefin are fed to the third reactor and copolymerized to form a high molecular weight, ethylene copolymer fraction. The feed ratio of α-olefin/ethylene is preferably from 0.05 to 0.2 by weight and more preferably from 0.1 to 0.2 by weight. The polymerization temperatures in the reactors can be the same or different. Preferably, the polymerization temperature is from 50 °C to 150 °C, more preferably from 50 °C to 100 °C. The slurry from the third reactor is flashed and dried to remove the solvent and residual monomers.

The HDPE component (a) generally consists of, or at least consists essentially of, the HDPE. In certain embodiments, the HDPE component (a) consists of, or consists essentially of, a blend of one or more HDPEs and one or more further polyethylene resins selected from linear low density polyethylenes (LLDPE), linear medium density polyethylenes (LMDPE), and metallocene polyethylenes. The amount of the further polyethylene resin(s) will normally not exceed 10%-wt., based on the HDPE component (a). In some embodiments, the further polyethylene resin(s) may be present in up to 7%-wt., or up to 5%-wt., based on the HDPE component (a). Those having ordinary skill will readily appreciate that the HDPE component (a) may be a blend of two or more HDPEs, optionally including the further polyethylene resin(s). In the event that two or more HDPEs are blended and/or the HDPE is blended with one or more further

polyethylene resins, the blend should have a density of from 0.935 g/cm$^3$ to 0.965 g/cm$^3$, or from 0.945 g/cm$^3$ to 0.955 g/cm$^3$, or from 0.947 g/cm$^3$ to 0.949 g/cm$^3$, or should be at least 0.946 g/cm$^3$. Also, the blend typically should have a HLMI of at most 20 g/10 min.

**B) The Hindered Phenol Antioxidant**

Hindered phenol antioxidants which are suited as component (b) of the HDPE composition generally are compounds which comprise at least one phenol group which is at least 2-substituted. In addition to 2-substituted phenol groups such phenol groups also include, e.g., 2,4-, 2,5- and 2,6-disubstituted phenol groups as well as 2,3,6- and 2,4,6-trisubstituted phenol groups.

In accordance with particular embodiments, the hindered phenol antioxidant is a hindered phenol of formula (I)

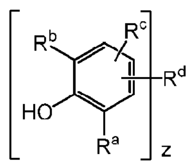

(I)

wherein

- z is an integer from 1 to 4;
- $R^a$ is a secondary or tertiary $C_3$-$C_6$-alkyl group, a $C_3$-$C_6$-cycloalkyl group, or a phenyl group;
- $R^b$ is hydrogen, a $C_1$-$C_6$-alkyl group, a $C_3$-$C_6$-cycloalkyl group, or a phenyl group;
- $R^c$ is hydrogen or a $C_1$-$C_6$-alkyl group, and
- $R^d$ is an organic radical having z valences.

Secondary and tertiary $C_3$-$C_6$-alkyl groups as mentioned for $R^a$ are aliphatic hydrocarbon radicals having 3 to 6 carbon atoms which are bonded to the phenyl ring via a secondary or tertiary carbon of the radical, such as, e.g., isopropyl, 2-butyl, tert-butyl, 2-pentyl, 1,1-dimethylpropyl, and the like.

$C_3$-$C_6$-Cycloalkyl groups as mentioned for $R^a$ and $R^b$ are monocyclic hydrocarbon radicals having 3 to 6 carbon atoms such as, e.g., cyclopropyl, cyclopentyl, and cyclohexyl.

$C_1$-$C_6$-alkyl groups as mentioned for $R^b$ and $R^c$ may be straight chain or branched hydrocarbon radicals having 1 to 6 carbon atoms, e.g., methyl, ethyl, propyl, butyl, pentyl, and hexyl, as well as the branched isomers thereof including the aforementioned secondary and tertiary $C_3$-$C_6$-alkyl groups, in particular methyl, ethyl propyl, isopropyl, butyl, 2-butyl, tert-butyl, 2-pentyl, 1,1-dimethylpropyl, and the like.

In some of the particular embodiments, $R^a$ is a tertiary $C_3$-$C_6$-alkyl group, $R^b$ is hydrogen or a $C_1$-$C_4$-alkyl group, and $R^c$ is hydrogen or a $C_1$-$C_4$-alkyl group.

In further particular embodiments, $R^a$ is a tertiary $C_3$-$C_6$-alkyl group, $R^b$ is hydrogen, or a $C_1$-$C_4$-alkyl group, and $R^c$ is hydrogen.

In other particular embodiments, $R^a$ and $R^b$ independently are tertiary $C_3$-$C_6$-alkyl groups, and $R^c$ is hydrogen.

In other particular embodiments, $R^a$ are tertiary $C_3$-$C_6$-alkyl groups, and $R^b$ and $R^c$ independently are hydrogen or methyl.

The moiety $R^d$ may be any mono- to tetra-valent organic radical having, in addition to carbon and hydrogen, one or more heteroatoms selected from oxygen, nitrogen and sulfur. Illustrative $R^d$ radicals include, in particular, $(CH_2)_2$-$CO_2$-$C_{18}H_{37}$ (z = 1) and the polyvalent radicals $R^{d1}$ to $R^{d10}$:

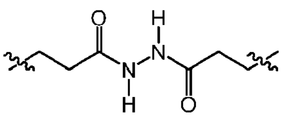

($R^{d1}$) z = 2

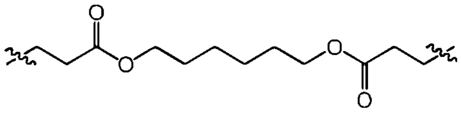

($R^{d2}$) z = 2

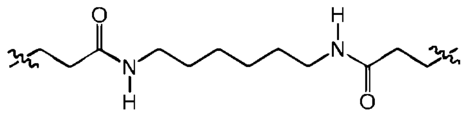

$(R^{d3})$ z = 2

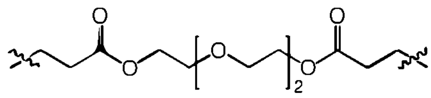

$(R^{d4})$ z = 2

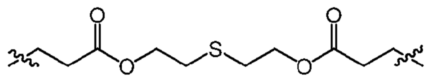

$(R^{d5})$ z = 2

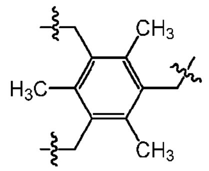

$(R^{d6})$ z = 3

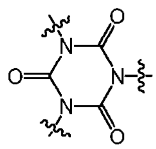

$(R^{d7})$ z = 3

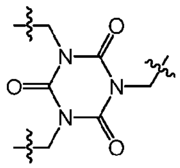

$(R^{d8})$ z = 3

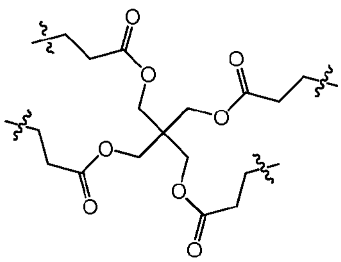

$(R^{d9})$ z = 4

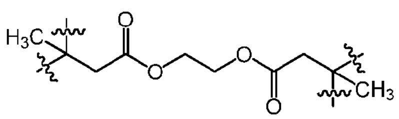

$(R^{d10})$ z = 4.

In some embodiments, the hindered phenol antioxidant component (b) comprises, or consists of, one or more hindered phenol antioxidant selected from the group consisting of n-octadecyl-beta-(4'-hydroxy-3',5'-di-tert-butylphenyl) propionate (Irganox● 1076), N,N'-bis[3-(3,5-di-tert-butyl-4-hydroxyphenyl)propionyl] hydrazine (Irganox● MD1024), 1,6-hexanediol bis[3-(3,5-di-tert-butyl-4-hydroxyphenyl)propionate] (Irganox● 259), N,N'-hexamethylene bis(3,5-di-tert-butyl-4-liydroxyliydrocinnamide (Irganox● 1098), triethyleneglycol bis[3-(3-tert-butyl-4-hydroxy-5-methylphenyl)propionate] (Irganox● 245), 2,2-thiodiethylene bis[3-(3,5-di-tert-butyl-4-hydroxyphenyl)propionate] (Irganox● 1035), 1,3,5-trimethyl-2,4,6-tris(3,5-di-tert-butyl-4-hydroxybenzyl) benzene (Irganox● 1330), tris(3,5-di-tert-butyl-4-hydroxyphenyl)isocyanurate (Cheminox● 314), tris(3,5-di-tert-butyl-4-hydroxybenzyl)isocyanurate (Irganox● 3114), 1,3,5-tris(4-tert-butyl-3-hydroxy-2,6-dimethylbenzyl)isocyanurate (Cyanox● 1790), tetrakis[methylene 3-(3',5'-di-tert-butyl-4-hydroxyphenyl)propionate]methane (Irganox● 1010), and ethylene bis[3,3-bis(3-tert-butyl-4-hydroxyphenyl)butyrate] (Hostanox● O3).

In further embodiments, the hindered phenol antioxidant component (b) comprises, or consists of, one or more hindered phenol antioxidants selected from the group consisting of n-octadecyl-beta-(4'-hydroxy-3',5'-di-tert-butylphenyl) propionate (Irganox● 1076), N,N'-bis[3-(3,5-di-tert-butyl-4-hydroxyphenyl)propionyl] hydrazine (Irganox● MD1024), 1,3,5-trimethyl-2,4,6-tris(3,5-di-tert-butyl-4-hydroxybenzyl) benzene (Irganox● 1330), tris(3,5-di-tert-butyl-4-hydroxybenzyl)isocyanurate (Irganox● 3114), 1,3,5-tris(4-tert-butyl-3-hydroxy-2,6-dimethylbenzyl)isocyanurate (Cyanox● 1790), tetrakis[methylene 3-(3',5'-di-tert-butyl-4-hydroxyphenyl)propionate]methane (Irganox● 1010), and ethylene bis[3,3-bis(3-tert-butyl-4-hydroxyphenyl)butyrate] (Hostanox● 03).

In other embodiments, the hindered phenol antioxidant component (b) comprises 1,3,5-trimethyl-2,4,6-tris(3,5-di-tert-butyl-4-hydroxybenzyl) benzene (Irganox● 1330).

Those having ordinary skill in the art will appreciate that the hindered phenol antioxidant component (b), while consisting of hindered phenol antioxidant, may be composed of two or more hindered phenol antioxidants.

The hindered phenol antioxidant component (b) is generally incorporated into the HDPE composition in amounts sufficient to improve the OIT number retention. The amount will depend to a certain extent on the quality of the HDPE as well as the balance relative to the components (c), (d) and optionally (e). Although the amount may vary broadly, the amount will generally range from 0.01 to 1.5%-wt., or from 0.02 to 1.0%-wt., or from 0.05 to 0.5%-wt., based on the weight of the HDPE component (a). In particular aspects of these embodiments, the hindered phenol antioxidant component (b) may be employed in at least 0.06%-wt., or at least 0.08%-wt., or at least 0.09%-wt., based on the weight of the HDPE component (a). In particular aspects of these embodiments, the hindered phenol antioxidant component (b) also may be employed in at most 0.45%-wt., or at most 0.40%-wt., or at most 0.35%-wt., based on the weight of the HDPE component (a).

**C) The Phosphonite or Phosphine Antioxidant**

Phosphonite and phosphine antioxidants which are suited as component (c) of the HDPE composition, generally, comprise a trivalent phosphorous and, bonded thereto, at least one carbon-bonded organic radical and at most two oxygen-bonded organic radicals. The expression 'phosphonite antioxidants' a used herein includes compounds in which the trivalent phosphorous carries one carbon-bonded organic radical and two oxygen-bonded organic radicals as well as compounds in which the trivalent phosphorous carries two carbon-bonded organic radicals and one oxygen-bonded organic radicals. Phosphine antioxidants include compounds in which the trivalent phosphorous carries three carbon-bonded organic radicals.

Accordingly, the phosphonite or phosphine antioxidant is a phosphonite or phosphine of formula (II)

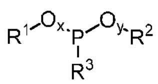

(II)

wherein x and y, independently of one another, are 0 or 1, and $R^1$, $R^2$ and $R^3$, independently, are carbon-bonded organic radicals.

In some of the embodiments, $R^1$, $R^2$ and $R^3$ of formula (II), independently, are aliphatic or aromatic hydrocarbon radicals.

In further embodiments, $R^1$ and $R^2$ of formula (II), independently, are aliphatic or aromatic hydrocarbon radicals and $R^3$ is an organic radical consisting of carbon and hydrogen, and optionally one or more hetero atoms selected from oxygen, nitrogen, and sulfur, which may be substituted by one or more $P[O_mR^4]_2$ groups wherein each m independently is 0 or 1, and each $R^4$ independently is an optionally substituted aliphatic or aromatic hydrocarbon radical.

In particular embodiments, formula (II) represents phosphonite and phosphine antioxidants wherein

| | |
|---|---|
| $R^1$ and $R^2$, | independently of one another, are unsubstituted or alkyl-substituted aryl groups; and |
| $R^3$ | is an aryl group which is unsubstituted or which carries one or more alkyl groups and/or a-$P[O_mR^4]_2$ group wherein each m independently is 0 or 1, and each $R^4$ independently is an unsubstituted or alkyl-substituted aryl group. |

Aryl groups $R^1$, $R^2$, and $R^3$ of formula (II), generally, represent mono- or polycyclic radicals comprising at least one benzene ring, such as, e.g., phenyl, naphthyl and biphenyl groups.

Suitable phosphonite and phosphine antioxidants are known in the art and described, e.g., in U.S. Patent No. 3,518,312, U.S. Patent No. 3,825,629, U.S. Patent No. 4,209,468, U.S. Patent No. 5,703,150, and U.K. Application No. GB 2,215,727. Additionally, a variety of such antioxidants are commercially available, e.g., tetrakis(2,4-di-tert-butylphenyl)4,4'-biphenylene diphosphonite (Irgafos● P-EPQ), tetrakis(2,4-di-tert-butyl-5-methylphenyl)-4,4'-biphenylene diphosphonite (GSY-P101), and Pepfine, an alkyl-aryl phosphine.

Those having ordinary skill in the art will appreciate that the phosphonite or phosphine antioxidant component (c), while consisting of phosphonite or phosphine antioxidants, may be composed of two or more phosphonite and/or phosphine antioxidants.

The phosphonite or phosphine antioxidant component (c) is generally incorporated into the HDPE composition in amounts sufficient to improve the OIT number retention. The amount will depend to a certain extent on the quality of the HDPE as well as the balance relative to the components (c), (d) and optionally (e). Although the amount may vary broadly, the amount will generally range from 0.01 to 1.5%-wt., or from 0.02 to 1.0%-wt., or from 0.02 to 0.5%-wt., based on the weight of the HDPE component (a). In particular aspects of these embodiments, phosphonite or phosphine antioxidant component (c) may be employed in at least 0.03%-wt., or at least 0.05%-wt., or at least 0.07%-wt., based on the weight of the HDPE component (a). In particular aspects of these embodiments, phosphonite or phosphine antioxidant component (c) also may be employed in at most 0.45%-wt., or at most 0.40%-wt., or at most 0.35%-wt., based on the weight of the HDPE component (a).

### D) The Hydrotalcite

Hydrotalcites which are suited as component (d) of the HDPE composition in general are basic, layered mixed hydroxides of metals in the oxidation states +2 and +3 and may be of natural or synthetic origin. Hydrotalcites of this kind can be described by various formulae, e.g., formulae (IIIa) and (IIIb)

$$M^{2+}{}_{1-a}M^{3+}{}_{a}(OH)_2(A^{b-})_{a/b}\times cH_2O \qquad (IIIa)$$

$$M^{2+}{}_{d}Al^{3+}{}_{2}(OH)_{2d+6-eb}(A^{b-})_{e}\times fH_2O \qquad (IIIb)$$

in which

- $M^{2+}$ is a cation of Mg, Ca, Sr, Ba, Zn, Pb, Sn, or Ni, in the oxidation state +2;
- $M^{3+}$ is a cation of Al, B, or Bi, in the oxidation state +3;
- a is a number up to 0.5;
- $A^{b-}$ is an anion of valency b;
- b is an integer from 1 to 4;
- c is zero or a number up to 2;
- d is a number up to 6;
- e is a number up to 2; and
- f is zero or a number up to 15.

The expression 'number' as used in the definition of the indices a, d, and e, and the variables c and f, herein refers to positive real and natural numbers, excluding zero. For example, none of the indices a, d, and e has a value of zero.

Suitable anions $A^{b-}$ generally include the anions of inorganic and organic acids, in particular $OH^-$, $Cl^-$, $Br^-$, $I^-$, $ClO_4^-$, $CH_3COO^-$, $C_6H_5COO^-$, $CO_3^{2-}$, $SO_4^{2-}$, $(OOC\text{-}COO)^{2-}$, $(CHOHCOO)_2^{2-}$, $(CHOH)_4CH_2OHCOO^-$, $C_2H_2(COO)_2^{2-}$, $(CH_2COO)_2^{2-}$, $CH_3CHOHCOO^-$, $SiO_3^{2-}$, $SiO_4^{4-}$, $Fe(CN)_6^{3-}$, $Fe(CN)_6^{4-}$, $BO_3^{3-}$, $PO_3^{3-}$, and $HPO_4^{2-}$.

In some embodiments, the hydrotalcite is of formula (IIIa); $M^{2+}$ is $Ca^{2+}$, $Mg^{2+}$ or a mixture of $Mg^{2+}$ and $Zn^{2+}$; and $A^{b-}$ is $CO_3^{2-}$, $BO_3^{3-}$, or $PO_3^{3-}$.

In other embodiments, the hydrotalcite is of formula (IIIb); $M^{2+}$ is $Mg^{2+}$, $Zn^{2+}$, in particular $Mg^{2+}$; $A^{b-}$ is $CO_3^{2-}$, $(OOC\text{-}COO)^{2-}$, $OH^-$ and $S^{2-}$; and f is a number from 0 to 5, especially from 0.5 to 5.

In particular embodiments, the hydrotalcites can also be represented by the following formulae (III.1) to (III.7):

$$Al_2O_3 \times 6MgO \times CO_2 \times 12H_2O \qquad (III.1)$$

$$Mg_{4.5}\,Al_2(OH)_{13} \times CO_3 \times 3.5H_2O \qquad (III.2)$$

$$4MgO \times Al_2O_3 \times CO_2 \times 9H_2O \qquad (III.3)$$

$$4MgO \times Al_2O_3 \times CO_2 \times 6H_2O \qquad (III.4)$$

$$ZnO \times 3MgO \times Al_2O_3 \times CO_2 \times 8\text{-}9H_2O \qquad (III.5)$$

$ZnO \times 3MgO \times Al_2O_3 \times CO_2 \times 5\text{-}6H_2O$ (III.6)

$Mg_{4.5}Al_2(OH)_{13} \times CO_3$ (III.7)

Suitable natural and synthetic hydrotalcites are known in the art and are commercially available. Synthetic hydrotalcites are described, for example, in U.S. Patent No. RE34164, and U.S. Patent No. 4,904,457. Natural and synthetic hydrotalcites are commercially available and include, e.g., DHT-4A and HI-TAL.

The hydrotalcite component (d) is generally incorporated into the HDPE composition in amounts sufficient to improve the OIT number retention. The amount will depend to a certain extent on the quality of the HDPE as well as the balance relative to the components (b), (c), and optionally (e). Although the amount may vary broadly, the amount will generally range from 0.01 to 5.0%-wt., or from 0.01 to 2.5%-wt., or from 0.01 to 1.0%-wt., based on the weight of the HDPE component (a). In particular aspects of these embodiments, the hydrotalcite component (d) may be employed in at least 0.02%-wt., or at least 0.03%-wt., or at least 0.05%-wt., based on the weight of the HDPE component (a). In particular aspects of these embodiments, the hydrotalcite component (d) also may be employed in at most 0.85%-wt., or at most 0.70%-wt., or at most 0.5%-wt., based on the weight of the HDPE component (a).

**E) The Optional Additive(s)**

In addition to the mandatory components (a), (b), (c), and (d), the HDPE composition optionally may further comprise one or more additives (e) which are different from the mandatory additives (b), (c), and (d) so long as the additives (e) do not interfere with the improved OIT number retention of HDPE composition.

Suitable additional additives (e) may be selected, for example, from UV absorbers, light stabilizers, metal deactivators, peroxide scavengers, polyamide stabilizers, basic co-stabilizers, nucleating agents, fillers, reinforcing agents, aminoxy propanoate derivatives, lubricants, pigments, optical brighteners, anti-static agents, processing aids, tracers, waxes, melt strength enhancers, and anti-scratch additives.

Suitable UV absorbers and light stabilizers (e.1) include, for example,

- 2-(2'-hydroxyphenyl)-benzotriazoles, such as the 5'-methyl-, 3',5'-di-tert-butyl-, 5'-tert-butyl-, 5'-(1,1,3,3-tetramethylbutyl)-, 5-chloro-3',5'-di-tert-butyl-, 5-chloro-3'-tert-butyl-, 5'-methyl-3'-sec-butyl-, 5'-tert-butyl-4'-octoxy-, 3',5'-di-tert-amyl-, and 3',5-bis-(α,α-dimethylbenzyl)-derivatives;
- 2-hydroxy-benzophenones, such as the 4-hydroxy-, 4-methoxy-, 4-octoxy, 4-decloxy-, 4-dodecyloxy-, 4-benzyloxy, 4,2',4'-trihydroxy- and 2'-decylhydroxy-4,4'-dimethoxy-derivatives;
- esters of substituted and unsubstituted benzoic acids, such as phenyl salicylate, 4-tert-butylphenyl salicylate, octylphenyl salicylate, dibenzoylresorcinol, bis-(4-tert-butylbenzoyl)-resorcinol, benzoylresorcinol, 2,4-di-tert-butylphenyl-3,5-di-tert-butyl-4-hydroxybenzoate and hexadecyl-3,5-di-tert-butyl-4-hydroxybenzoate;
- acrylate such as α-cyano-β,β-diphenylacrylic acid-ethyl ester or isooctyl ester, α-carbomethoxy-cinnamic acid methyl ester, α-cyano-β-methyl-p-methoxy-cinnamic acid methyl ester and butyl ester, α-carbomethoxy-p-methoxy-cinnamic acid methyl ester, and N-(β-carbomethoxy-β-cyano-vinyl)-2-methyl-indoline;
- nickel compounds such as nickel complexes of 2,2'-thiobis(4-(1,1,1,3-tetramethylbutyl)-phenol), e.g., the 1:1 or 1:2 complex, optionally with additional ligands such as n-butylamine, triethanolamine and N-cyclohexyl-diethanolamine, nickel dibutyldithiocarbamate, nickel salts of 4-hydroxy-3,5-di-tert-butylbenzylphosphonic acid monoalkyl esters, such as of the methyl, ethyl, and butyl ester, nickel complexes of ketoximes such as of 2-hydroxy-4-methylpenyl undecyl ketoxime, nickel complexes of 1-phenyl-4-lauroyl-5-hydroxy-pyrazole, optionally with additional ligands;
- oxalic acid diamides such as 4,4'-dioctyloxy-oxanilide, 2,2'-di-octyloxy-5',5'-di-tert-butyloxanilide, 2,2'-di-dodecyloxy-5',5'-di-tert-butyl-oxanilide, 2-ethoxy-2'-ethyl-oxanilide, N,N'-bis(3-dimethylaminopropyl)-oxalamide, 2-ethoxy-5-tert-butyl-2'-ethyloxanilide and its mixture with 2-ethoxy-2'-ethyl-5,4-di-tert-butyloxanilide and mixtures of ortho- and para-methoxy as well as of ortho- and para-ethoxy-disubstituted oxanilides.

Suitable metal deactivators (e.2) include, for example, N,N'-diphenyloxalic acid diamide, N-salicylal-N'-salicyloylhydrazine, N,N'-bis-salicyloylhydrazine, N,N'-bis-(3,5-di-tert-butyl-4-hydrophenylpropionyl)-hydrazine, salicyloylamino-1,2,4-triazole, and bis-benzyliden-oxalic acid dihydrazide.

Suitable peroxide scavengers (e.3) include, for example, mercaptobenzimidazole, the zinc salt of 2-mercaptobenzimidazole, zinc-dibutyldithiocaramate, and dioctadecyldisulfide.

Suitable polyamide stabilizers (e.4) include, for example, copper salts in combination with iodides and/or phosphorus compounds and salts of divalent manganese.

Suitable basic co-stabilizers (e.5) include, for example, melamine, polyvinylpyrrolidone, dicyandiamide, triallyl cyanurate, urea derivatives, hydrazine derivatives, amines, polyamides, polyurethanes, alkali metal salts and alkaline

earth metal salts of higher fatty acids, for example, calcium stearate, calcium stearoyl lactate, calcium lactate, zinc stearate, magnesium stearate, sodium ricinoleate and potassium palmitate, antimony pyrocatecholate and zinc pyrocatecholate, and lithium, sodium, magnesium, calcium, and aluminum hydroxy carbonates.

Suitable nucleating agents (e.6) include, for example, 4-tert-butylbenzoic acid, adipic acid, diphenylacetic acid, sodium salt of methylene bis-2,4-dibutylphenyl, cyclic phosphate esters, sorbitol tris-benzaldehyde acetal, and sodium salt of bis(2,4-di-t-butyl phenyl)phosphate.

Suitable fillers and reinforcing agents (e.7) include, for example, calcium carbonate, silicates, glass fibers, asbestos, talc, kaolin, mica, barium sulfate, metal oxides and hydroxides, carbon black and graphite.

Suitable aminoxy propanoate derivatives (e.8) include, for example, methyl-3-(N,N-dibenzylaminoxy)propanoate; ethyl-3-(N,N-dibenzylaminoxy)propanonoate; 1,6-hexamethylene-bis(3-N,N-dibenzylaminoxy)proponoate); methyl-(2-(methyl)-3(N,N-dibenzylaminoxy)propanoate); octadecyl-3-(N,N-dibenzylaminoxy)propanoic acid; tetrakis(N,N-dibenzylaminoxy)ethyl carbonyl oxymethy)methane; octadecyl-3-(N,N-diethylaminoxy)-propanoate; 3-(N,N-dibenzylaminoxy)propanoic acid potassium salt; and 1,6-hexamethylene bis(3-(N-allyl-N-dodecyl aminoxy)propanoate).

Suitable lubricants (e.9) include, for example metal stearates such as calcium stearate, zinc stearate and sodium stearate; fluoropolymer processing aids; waxes, and polydimethylsiloxanes.

Suitable pigments (e.10) include, for example carbon black, titanium dioxide, phthalocyanine blue, calcium carbonate, ultramarine violet and blue, organic and inorganic pigments or dyes.

Suitable optical brighteners (e.11) include, for example Tinopal● OB (2,5-thiophenediylbis(5-tert-butyl-1,3-benzoxazole)).

Suitable anti-static agents (e.12) include, for example natural and synthetic ethoxylated amines such as: 2,2'-(octadec-9-enylimino)bisethanol, N,N-bis(2-hydroxyethyl)-n-octadecylamine (vegetable based), coco-bis(2-hydroxyethyl)amine, and Atmer● 163; polyethylene glycol, and sodium sec-alkanesulfonate.

Suitable processing aids (e.13) include, for example vinylidene fluoride/hexafluoropropene polymers, i.e., Dyneon● polymer processing additives (PPAs), Viton● PPAs, Kynar Flex● PPAs, and Dai-EL●.

Suitable tracers (e.14) include, for example tin oxide, titanium dioxide, zinc oxide, and barium sulfate.

Suitable waxes (e.15) include, for example polyethylene wax, polypropylene wax, and oxidized wax.

Suitable melt strength enhancers (e.16) include, for example tetrafluoroethylene, hexafluoropropylene, Daikin Polyflon● and Dyneon● fluoropolymers.

Suitable anti-scratch additives (e.17) include, for example erucamide, silicone, and organo-modified siloxanes.

In particular embodiments, the HDPE composition comprises, as additional additive(s) (e), at least one further additive selected from basic co-stabilizers, nucleating agents, pigments, optical brighteners, anti-static agents, processing aids, tracers, waxes, melt strength enhancers, and anti-scratch additives.

In further particular embodiments, the HDPE composition comprises, as additional additive(s) (e), at least one further additive selected from basic co-stabilizers, lubricants, pigments, tracers, and waxes. In general, the HDPE composition comprises, as additional additive(s) (e), at least one basic co-stabilizer.

When used, the optional additives (e) usually can be employed in customary amounts which generally can range from 0.01 to 5%-wt., or from 0.01 to 3.0%-wt., or from 0.01 to 2%-wt., based on the HDPE component (a) except in the case of fillers, reinforcing agents, and pigments. In particular embodiments, the optional additives (e) different from fillers, reinforcing agents, and pigments, may be incorporated in at least 0.02%-wt., or at least 0.035%-wt., or at least 0.05%-wt., based on the HDPE component (a). In particular embodiments, the optional additives (e) different from fillers, reinforcing agents, and pigments, also may be incorporated in at most 1.85%-wt., or at most 1.70%-wt., or at most 1.5%-wt., based on the HDPE component (a).

In some embodiments, optional additives (e) different from fillers, reinforcing agents, and pigments, are employed in a total amount of from 0.01 to 20%-wt., or from 0.01 to 15%-wt., or from 0.01 to 10%-wt., based on the HDPE component (a). In particular embodiments, optional additives (e) different from fillers, reinforcing agents, and pigments, are employed in a total amount of from 0.01 to 8%-wt., or from 0.01 to 5%-wt., or from 0.01 to 3%-wt., based on the HDPE component (a). In further particular embodiments, the optional additives (e) different from fillers, reinforcing agents, and pigments, are employed in a total amount of from 0.02 to 3%-wt., or from 0.035 to 2.5%-wt., or from 0.05 to 2.0%-wt., based on the HDPE component (a).

The total amount of fillers and reinforcing agents, if present, generally may range from 5 to 50%-wt., or from 10 to 40%-wt., based on the HDPE component (a). The total amount of pigments, if present, generally may range from 3 ppm to 5%-wt., or from 5 ppm to 4%-wt., or from 10 ppm to 2%-wt., based on the HDPE component (a).

**F) The HDPE Composition**

The HDPE compositions disclosed herein generally consist essentially of the components (a) through (e), that is, other constituents which may be incorporated are used in amounts which do not interfere with the improved OIT number retention of the HDPE composition. In general, such other constituents will only constitute a small portion of the

HDPE composition, i.e., the amount will be at most 10%-wt, or at most 8%-wt., or at most 5%-wt., based on the HDPE component (a). In particular embodiments, the amount will be at most 3%-wt, or at most 1%-wt., or at most 0.5%-wt., based on the HDPE component (a).

In some embodiments, the HDPE compositions according to this disclosure consist essentially of, or consists of,

a) the HDPE;
b) from 0.01 to 1.5%-wt., or 0.02 to 1.0%-wt., or 0.05 to 0.5 %-wt., based on the weight of (a), of the hindered phenol antioxidant;
c) from 0.01 to 1.5%-wt., or 0.02 to 1.0%-wt., or 0.02 to 0.5 %-wt., based on the weight of (a), of the phosphonite or phosphine antioxidant;
d) from 0.01 to 5.0%-wt., or 0.01 to 2.5%-wt., or 0.01 to 1.0 %-wt., based on the weight of (a), of the co-stabilizing synthetic or natural hydrotalcite; and
e) optionally one or more additives different from components (b) to (d), in each case in amounts of from 0.01 to 5.0%-wt., or 0.01 to 3.0%-wt., or 0.01 to 2.0 %-wt., based on the weight of (a).

In some particular embodiments, the HDPE composition consists essentially of, or consists of,

a) the HDPE;
b) from 0.05 to 0.5 %-wt., based on the weight of (a), of the hindered phenol antioxidant;
c) from 0.01 to 1.5%-wt., or 0.02 to 1.0%-wt., or 0.02 to 0.5 %-wt., based on the weight of (a), of the phosphonite or phosphine antioxidant;
d) from 0.01 to 5.0%-wt., or 0.01 to 2.5%-wt., or 0.01 to 1.0 %-wt., based on the weight of (a), of the co-stabilizing synthetic or natural hydrotalcite; and
e) optionally one or more additives different from components (b) to (d), in each case in amounts of from 0.01 to 5.0%-wt., or 0.01 to 3.0%-wt., or 0.01 to 2.0 %-wt., based on the weight of (a).

In further particular embodiments, the HDPE composition consists essentially of, or consists of,

a) the HDPE;
b) from 0.01 to 1.5%-wt., or 0.02 to 1.0%-wt., or 0.05 to 0.5 %-wt., based on the weight of (a), of the hindered phenol antioxidant;
c) from 0.02 to 0.5 %-wt., based on the weight of (a), of the phosphonite or phosphine antioxidant;
d) from 0.01 to 5.0%-wt., or 0.01 to 2.5%-wt., or 0.01 to 1.0 %-wt., based on the weight of (a), of the co-stabilizing synthetic or natural hydrotalcite; and
e) optionally one or more additives different from components (b) to (d), in each case in amounts of from 0.01 to 5.0%-wt., or 0.01 to 3.0%-wt., or 0.01 to 2.0 %-wt., based on the weight of (a).

In other particular embodiments, the HDPE composition consists essentially of, or consists of,

a) the HDPE;
b) from 0.01 to 1.5%-wt., or 0.02 to 1.0%-wt., or 0.05 to 0.5 %-wt., based on the weight of (a), of the hindered phenol antioxidant;
c) from 0.01 to 1.5%-wt., or 0.02 to 1.0%-wt., or 0.02 to 0.5 %-wt., based on the weight of (a), of the phosphonite or phosphine antioxidant;
d) from 0.01 to 1.0 %-wt., based on the weight of (a), of the co-stabilizing synthetic or natural hydrotalcite; and
e) optionally one or more additives different from components (b) to (d), in each case in amounts of from 0.01 to 5.0%-wt., or 0.01 to 3.0%-wt., or 0.01 to 2.0 %-wt., based on the weight of (a).

In additional particular embodiments, the HDPE composition consists essentially of, or consists of,

a) the HDPE;
b) from 0.01 to 1.5%-wt., or 0.02 to 1.0%-wt., or 0.05 to 0.5 %-wt., based on the weight of (a), of the hindered phenol antioxidant;
c) from 0.01 to 1.5%-wt., or 0.02 to 1.0%-wt., or 0.02 to 0.5 %-wt., based on the weight of (a), of the phosphonite or phosphine antioxidant;
d) from 0.01 to 5.0%-wt., or 0.01 to 2.5%-wt., or 0.01 to 1.0 %-wt., based on the weight of (a), of the co-stabilizing synthetic or natural hydrotalcite; and
e) optionally one or more additives different from components (b) to (d), in each case in amounts of from 0.01 to

3.0%-wt., based on the weight of (a).

In very particular embodiments, the HDPE composition consists essentially of, or consists of,

a) the HDPE;
b) from 0.05 to 0.5 %-wt., based on the weight of (a), of the hindered phenol antioxidant;
c) from 0.02 to 0.5 %-wt., based on the weight of (a), of the phosphonite or phosphine antioxidant;
d) from 0.01 to 1.0 %-wt., based on the weight of (a), of the co-stabilizing synthetic or natural hydrotalcite; and
e) optionally one or more additives different from components (b) to (d), in each case in amounts of from 0.01 to 3.0%-wt., based on the weight of (a).

In some embodiments, the HDPE compositions according to this disclosure consist essentially of, or consists of,

a) the HDPE;
b) from 0.06 to 0.45%-wt., or 0.08 to 0.40%-wt., or 0.09 to 0.35 %-wt., based on the weight of (a), of the hindered phenol antioxidant;
c) from 0.03 to 0.45%-wt., or 0.05 to 0.40%-wt., or 0.07 to 0.35 %-wt., based on the weight of (a), of the phosphonite or phosphine antioxidant;
d) from 0.02 to 0.85%-wt., or 0.03 to 0.70%-wt., or 0.05 to 0.5%-wt., based on the weight of (a), of the co-stabilizing synthetic or natural hydrotalcite; and
e) optionally one or more additives different from components (b) to (d), in each case in amounts of from 0.02 to 1.85%-wt., or 0.035 to 1.70%-wt., or 0.05 to 1.50 %-wt., based on the weight of (a).

In some particular embodiments, the HDPE composition consists essentially of, or consists of,

a) the HDPE;
b) from 0.06 to 0.45%-wt., based on the weight of (a), of the hindered phenol antioxidant;
c) from 0.03 to 0.45%-wt., or 0.05 to 0.40%-wt., or 0.07 to 0.35 %-wt., based on the weight of (a), of the phosphonite or phosphine antioxidant;
d) from 0.02 to 0.85%-wt., or 0.03 to 0.70%-wt., or 0.05 to 0.5%-wt., based on the weight of (a), of the co-stabilizing synthetic or natural hydrotalcite; and
e) optionally one or more additives different from components (b) to (d), in each case in amounts of from 0.02 to 1.85%-wt., or 0.035 to 1.70%-wt., or 0.05 to 1.50 %-wt., based on the weight of (a).

In further particular embodiments, the HDPE composition consists essentially of, or consists of,

a) the HDPE;
b) from 0.06 to 0.45%-wt., or 0.08 to 0.40%-wt., or 0.09 to 0.35 %-wt., based on the weight of (a), of the hindered phenol antioxidant;
c) from 0.03 to 0.45%-wt., based on the weight of (a), of the phosphonite or phosphine antioxidant;
d) from 0.02 to 0.85%-wt., or 0.03 to 0.70%-wt., or 0.05 to 0.5%-wt., based on the weight of (a), of the co-stabilizing synthetic or natural hydrotalcite; and
e) optionally one or more additives different from components (b) to (d), in each case in amounts of from 0.02 to 1.85%-wt., or 0.035 to 1.70%-wt., or 0.05 to 1.50 %-wt., based on the weight of (a).

In other particular embodiments, the HDPE composition consists essentially of, or consists of,

a) the HDPE;
b) from 0.06 to 0.45%-wt., or 0.08 to 0.40%-wt., or 0.09 to 0.35 %-wt., based on the weight of (a), of the hindered phenol antioxidant;
c) from 0.03 to 0.45%-wt., or 0.05 to 0.40%-wt., or 0.07 to 0.35 %-wt., based on the weight of (a), of the phosphonite or phosphine antioxidant;
d) from 0.02 to 0.85%-wt., based on the weight of (a), of the co-stabilizing synthetic or natural hydrotalcite; and
e) optionally one or more additives different from components (b) to (d), in each case in amounts of from 0.02 to 1.85%-wt., or 0.035 to 1.70%-wt., or 0.05 to 1.50 %-wt., based on the weight of (a).

In additional particular embodiments, the HDPE composition consists essentially of, or consists of,

a) the HDPE;
b) from 0.06 to 0.45%-wt., or 0.08 to 0.40%-wt., or 0.09 to 0.35 %-wt., based on the weight of (a), of the hindered phenol antioxidant;
c) from 0.03 to 0.45%-wt., or 0.05 to 0.40%-wt., or 0.07 to 0.35 %-wt., based on the weight of (a), of the phosphonite or phosphine antioxidant;
d) from 0.02 to 0.85%-wt., or 0.03 to 0.70%-wt., or 0.05 to 0.5%-wt., based on the weight of (a), of the co-stabilizing synthetic or natural hydrotalcite; and
e) optionally one or more additives different from components (b) to (d), in each case in amounts of from 0.02 to 1.85%-wt., based on the weight of (a).

In very particular embodiments, the HDPE composition consists essentially of, or consists of,

a) the HDPE;
b) from 0.08 to 0.40%-wt., based on the weight of (a), of the hindered phenol antioxidant;
c) from 0.05 to 0.40%-wt., based on the weight of (a), of the phosphonite or phosphine antioxidant;
d) from 0.03 to 0.70%-wt., based on the weight of (a), of the co-stabilizing synthetic or natural hydrotalcite; and
e) optionally one or more additives different from components (b) to (d), in each case in amounts of from 0.035 to 1.70%-wt., based on the weight of (a).

In some aspects of the foregoing embodiments, the HDPE composition is essentially free, or is free, of amine antioxidants. In further aspects of the foregoing embodiments, the HDPE composition is essentially free, or is free, of amine stabilizers. In particular aspects of the foregoing embodiments, the HDPE composition is essentially free, or is free, of amine antioxidants and amine stabilizers.

In further aspects of the foregoing embodiments, the HDPE composition is essentially free of, or is free of, phosphite antioxidants, i.e., antioxidants which can be represented as $P[OR]_3$.

**G) The Stabilizer System**

The stabilizer system in accordance with the present disclosure generally is a preparation in which the hindered phenol antioxidant (b), the phosphonite or phosphine antioxidant (c), and the co-stabilizing synthetic or natural hydrotalcite (d) are provided in combination with one another in pre-adjusted, ready-for-use amounts and ratios, optionally in combination with a binder or carrier, e.g., in form of one or more masterbatches.

In some embodiments, the stabilizer system, optionally in combination with the binder, may further include pre-adjusted, ready-for-use amounts and ratios of one or more of the additives (e). In particular embodiments, the stabilizer system comprises, as the additional additive(s) (e), at least one further additive selected from basic co-stabilizers, nucleating agents, pigments, optical brighteners, anti-static agents, processing aids, tracers, melt-strength enhancers, and anti-scratch additives.

The use of masterbatches to more effectively incorporate ingredients, particularly those used at low levels, into polyolefin resins is well known. The use of masterbatches is advantageous because the ingredients are provided in pre-dispersed form which further aids their uniform distribution in the polyolefin resin, especially in the case of ingredients which are employed in low amounts. Depending on the nature of the ingredients, masterbatches also may be advantageous in terms of storage stability, handling, and dosage. Masterbatches, sometimes also referred to as a concentrates, have relatively high concentrations of the ingredients in a binder resin in which the ingredients can be readily dispersed and which is compatible with the polyolefin resins.

Accordingly, in some embodiments, the stabilizer system disclosed herein consists essentially of, or consists of:

i) the hindered phenol antioxidant (b);
ii) from 0.005 to 150 parts by weight, or from 0.01 to 100 parts by weight, or from 0.05 to 50 parts by weigh, or from 0.1 to 25 parts by weight, of the phosphonite or phosphine antioxidant (c), based on the weight of the hindered phenol antioxidant (b);
iii) from 0.002 to 150 parts by weight, or from 0.005 to 100 parts by weight, or from 0.01 to 75 parts by weight, or from 0.05 to 50 parts by weight of the co-stabilizing synthetic or natural hydrotalcite (d), based on the weight of the hindered phenol antioxidant (b);
iv) optionally from 0.02 to 100 parts by weight, or from 0.02 to 60 parts by weight, or from 0.02 to 40 parts by weight, of the additive(s) (e), based on the weight of the hindered phenol antioxidant (b); and
v) optionally a binder.

In some particular embodiments, the stabilizer system disclosed herein consists essentially of, or consists of:

i) the hindered phenol antioxidant (b);
ii) from 0.05 to 50 parts by weigh, or from 0.1 to 25 parts by weight, of the phosphonite or phosphine antioxidant (c), based on the weight of the hindered phenol antioxidant (b);
iii) from 0.002 to 150 parts by weight, or from 0.005 to 100 parts by weight, or from 0.01 to 75 parts by weight, or from 0.05 to 50 parts by weight of the co-stabilizing synthetic or natural hydrotalcite (d), based on the weight of the hindered phenol antioxidant (b);
iv) optionally from 0.02 to 100 parts by weight, or from 0.02 to 60 parts by weight, or from 0.02 to 40 parts by weight, of the additive(s) (e), based on the weight of the hindered phenol antioxidant (b); and
v) optionally a binder.

In further particular embodiments, the stabilizer system disclosed herein consists essentially of, or consists of:

i) the hindered phenol antioxidant (b);
ii) from 0.005 to 150 parts by weight, or from 0.01 to 100 parts by weight, or from 0.05 to 50 parts by weigh, or from 0.1 to 25 parts by weight, of the phosphonite or phosphine antioxidant (c), based on the weight of the hindered phenol antioxidant (b);
iii) from 0.01 to 75 parts by weight, or from 0.05 to 50 parts by weight of the co-stabilizing synthetic or natural hydrotalcite (d), based on the weight of the hindered phenol antioxidant (b);
iv) optionally from 0.02 to 100 parts by weight, or from 0.02 to 60 parts by weight, or from 0.02 to 40 parts by weight, of the additive(s) (e), based on the weight of the hindered phenol antioxidant (b); and
v) optionally a binder.

In very particular embodiments, the stabilizer system disclosed herein consists essentially of, or consists of:

i) the hindered phenol antioxidant (b);
ii) from 0.1 to 25 parts by weight, of the phosphonite or phosphine antioxidant (c), based on the weight of the hindered phenol antioxidant (b);
iii) from from 0.05 to 50 parts by weight of the co-stabilizing synthetic or natural hydrotalcite (d), based on the weight of the hindered phenol antioxidant (b);
iv) optionally from 0.02 to 100 parts by weight, or from 0.02 to 60 parts by weight, or from 0.02 to 40 parts by weight, of the additive(s) (e), based on the weight of the hindered phenol antioxidant (b); and
v) optionally a binder.

In further embodiments, the stabilizer system disclosed herein consists essentially of, or consists of:

i) the hindered phenol antioxidant (b);
ii) from 0.1 to 15 parts by weight, or from 0.2 to 10 parts by weight, or from 0.25 to 5 parts by weigh, of the phosphonite or phosphine antioxidant (c), based on the weight of the hindered phenol antioxidant (b);
iii) from 0.07 to 25 parts by weight, or from 0.1 to 15 parts by weight, or from 0.15 to 7.5 parts by weight, of the co-stabilizing synthetic or natural hydrotalcite (d), based on the weight of the hindered phenol antioxidant (b);
iv) optionally from 0.02 to 100 parts by weight, or from 0.02 to 60 parts by weight, or from 0.02 to 40 parts by weight, of the additive(s) (e), based on the weight of the hindered phenol antioxidant (b); and
v) optionally a binder.

In some particular embodiments, the stabilizer system disclosed herein consists essentially of, or consists of:

i) the hindered phenol antioxidant (b);
ii) from 0.1 to 15 parts by weight, or from 0.2 to 10 parts by weight, of the phosphonite or phosphine antioxidant (c), based on the weight of the hindered phenol antioxidant (b); and
iii) from 0.07 to 25 parts by weight, or from 0.1 to 15 parts by weight, or from 0.15 to 7.5 parts by weight, of the co-stabilizing synthetic or natural hydrotalcite (d), based on the weight of the hindered phenol antioxidant (b);
iv) optionally from 0.02 to 100 parts by weight, or from 0.02 to 60 parts by weight, or from 0.02 to 40 parts by weight, of the additive(s) (e), based on the weight of the hindered phenol antioxidant (b); and
v) optionally a binder.

In further particular embodiments, the stabilizer system disclosed herein consists essentially of, or consists of:

i) the hindered phenol antioxidant (b);

ii) from 0.1 to 15 parts by weight, or from 0.2 to 10 parts by weight, or from 0.25 to 5 parts by weigh, of the phosphonite or phosphine antioxidant (c), based on the weight of the hindered phenol antioxidant (b);
iii) from 0.07 to 25 parts by weight, or from 0.1 to 15 parts by weight, of the co-stabilizing synthetic or natural hydrotalcite (d), based on the weight of the hindered phenol antioxidant (b);
iv) optionally from 0.02 to 100 parts by weight, or from 0.02 to 60 parts by weight, or from 0.02 to 40 parts by weight, of the additive(s) (e), based on the weight of the hindered phenol antioxidant (b); and
v) optionally a binder.

In very particular embodiments, the stabilizer system disclosed herein consists essentially of, or consists of:

i) the hindered phenol antioxidant (b);
ii) from 0.2 to 10 parts by weight, of the phosphonite or phosphine antioxidant (c), based on the weight of the hindered phenol antioxidant (b);
iii) from from 0.1 to 15 parts by weight of the co-stabilizing synthetic or natural hydrotalcite (d), based on the weight of the hindered phenol antioxidant (b);
iv) optionally from 0.02 to 100 parts by weight, or from 0.02 to 60 parts by weight, or from 0.02 to 40 parts by weight, of the additive(s) (e), based on the weight of the hindered phenol antioxidant (b); and
v) optionally a binder.

The hindered phenol antioxidant (b) which constitutes component (i) of the stabilizer system, the phosphonite or phosphine antioxidant (c) which constitutes component (ii) of the stabilizer system, and the hydrotalcite (d) which constitutes component (iii) of the stabilizer system, are in general and in particular as addressed hereinbefore.

The optional further additive (iv) generally is selected from basic co-stabilizers such as mentioned hereinbefore as (e.5), nucleating agents such as mentioned hereinbefore as (e.6), pigments such as mentioned hereinbefore as (e.10), optical brighteners such as mentioned hereinbefore as (e.11), anti-static agents such as mentioned hereinbefore as (e.12), processing aids such as mentioned hereinbefore as (e.13), tracers such as mentioned hereinbefore as (e.14), melt-strength enhancers such as mentioned hereinbefore as (e.16), and anti-scratch additives such as mentioned hereinbefore as (e.17), or a mixture of two or more thereof. In particular embodiments, the optional further additional additive (iv), is at least one further additive selected from basic co-stabilizers, lubricants, pigments, tracers, and waxes. In further particular embodiments, the optional further additive (iv) is or comprises at least one of the basic co-stabilizers (e.5).

In particular aspects of the foregoing embodiments, the stabilizer composition is essentially free of, or is free of, phosphite antioxidants, i.e., antioxidants which can be represented as $P[OR]_3$.

In further aspects of the foregoing embodiments, the stabilizer composition is essentially free, or is free, of amine antioxidants. In further aspects of the foregoing embodiments, the stabilizer composition is essentially free, or is free, of amine stabilizers. In particular aspects of the foregoing embodiments, the stabilizer composition is essentially free, or is free, of amine antioxidants and amine stabilizers.

Suitable binders (v) include in particular polyolefin waxes and resins and include, e.g., the waxes (e.15) addressed in general and in particular hereinbefore, and mixtures of two or more resins and/or binders. Those having ordinary skill will appreciate that suitable binders are those resins and waxes and mixtures which are capable of predispersing the stabilizer components (i) to (iii), and optionally (iv), and which are readily miscible with the target polyolefin.

In some embodiments, the binder comprises one or more polyolefins selected from polyethylene, polypropylene, ethylene copolymers, and propylene copolymers. In particular aspects, the binder consists essentially of, or consists of, one or more of these polyolefins. In further particular aspects of the foregoing embodiments, the binder comprises, consists essentially or, or consists of, ethylene homo- or copolymers, or mixtures of two or more thereof. In further particular aspects of the foregoing embodiments, the binder comprises, consists essentially or, or consists of, an LDPE or a mixture of two or more thereof.

In other embodiments, the binder is or comprises a polyolefin which corresponds to one of the fractions of the HDPE (a), e.g., the binder is a polyethylene having a density of at least 0.965 g/cm$^3$ and $MI_2$ from 50 to 400 g/10 min, or a polyethylene having a density greater than 0.965 g/cm$^3$ and an $MI_2$ of from 50 g/10 min to 250 g/10 min.

The amount of the binder, if used, is generally not critical and can be varied within broad ranges. Normally, when the stabilizer system is conditioned in form of one or more masterbatches, the binder will constitute 10 to 75%-wt., or 15 to 70%-wt., or 20 to 60%-wt., of the total weight of the masterbatch(es). Correspondingly, the constituents (i) to (iii), and optionally (iv), are generally employed in masterbatch(es) of the stabilizer systems in 25 to 90%-wt., or 30 to 85%-wt., or 40 to 80%-wt., of the total weight of the masterbatch.

For the purposes of this disclosure, a polymeric binder which is employed in conditioning the stabilizer system is considered to become a part of the HDPE component (a) when the respective stabilizer system is blended with a HDPE. That is, a HDPE composition which is obtained by blending the HDPE and a stabilizer system which consists of components (i) to (v) is understood herein as consisting of the HDPE component (a) and the stabilizer system components

(i) to (iv), or (b) to (e), respectively.

The components (i) through (iii), and optionally (iv), of the stabilizer system may be conditioned together, that is, they may be premixed or blended, or they may be conditioned in two or three parts. Separate conditioning of the components (i) through (iii), and optionally (iv), of the stabilizer system improves and facilitates varying the dosage of the components and allows that the amounts and ratios of the components can be varied and adapted to the needs of a particular composition more easily.

The expression 'conditioning' as used in this context refers to providing a ready-to-use form of the stabilizer system which allows convenient dosage of the stabilizer system, or which allows convenient combination of the components (i) to (iii), and optionally (iv), to form the stabilizer system by the user. The stabilizer system, if conditioned in multiple parts, will normally be provided in a combination pack including instructions aiding the user in dosing the separate parts such that the stabilizer system is obtained.

When the components (i) through (iii), and optionally (iv), of the stabilizer system are conditioned separately, i.e., in two or three parts, the binder, if used, may be split between the parts. Alternatively, at least one of the parts of the stabilizer system may be conditioned using the binder and at least one other part thereof may be conditioned without binder. In particular embodiments of the stabilizer system which is conditioned in multiple parts, each of the parts includes a fraction of the binder.

In further particular embodiments, the stabilizer system is conditioned in two parts, wherein the first part consists essentially of, or consists of, the hindered phenol antioxidant (i) and optionally a first part of the binder (v), and the second part consists essentially of, or consists of the phosphonite or phosphine antioxidant (ii), the hydrotalcite (iii), and optionally a second part of the binder (v).

The optional further additives (iv), if present, may be incorporated in either one of separately conditioned parts of the stabilizer system. Alternatively, the further additives (iv) may be split between separately conditioned parts of the stabilizer system, or may be conditioned separately, in one or more parts, optionally together with parts of the binder.

## H) The Stabilizing Method

The stabilizer system in accordance with the present disclosure is generally suited to stabilize polyolefins against degradation due to exposure to chlorinated or non-chlorinated water of a temperature in the range of 0 °C to 100 °C.

Polyolefins in which the stabilizer system may be employed include polymers of monoolefins and diolefins, for example polypropylene, polyisobutylene, polybutene-1, polymethylpentene-1, polyisoprene, or polybutadiene, as well as polymers of cycloolefins, for instance of cyclopentene or norbornene, polyethylene (which optionally may be crosslinked), for example high density polyethylene (HDPE), low density polyethylene (LDPE) and linear low density polyethylene (LLDPE) may be used. Mixtures of these polymers, for example, mixtures of polypropylene with polyisobutylene, polypropylene with polyethylene (for example PP/HDPE, PP/LDPE) and mixtures of different types of polyethylene (for example LDPE/HDPE), may also be used. The stabilizer system is also useful for copolymers of monoolefins and diolefins with each other or with other vinyl monomers, such as, for example, ethylene/propylene, LLDPE and its mixtures with LDPE, propylene/butene-1, ethylene/hexene, ethylene/ethylpentene, ethylene/heptene, ethylene/octene, propylene/isobutylene, ethylene/butene-1, propylene/butadiene, isobutylene, isoprene, ethylene/alkyl acrylates, ethylene/alkyl methacrylates, ethylene/vinyl acetate (EVA) or ethylene/acrylic acid copolymers (EAA) and their salts (ionomers) and terpolymers of ethylene with propylene and a diene, such as hexadiene, dicyclopentadiene or ethylidene-norbornene; as well as mixtures of such copolymers and their mixtures with polymers mentioned above, for example polypropylene/ethylene propylene-copolymers, LDPE/EVA, LDPE/EAA, LLDPE/EVA, and LLDPE/EAA.

In particular embodiments, the polyolefin comprises, consists essentially of, or consists of, one or more HDPEs. In some aspects of these embodiments, the HDPE is as addressed in general and in particular for component (a).

The polyolefin is stabilized, and a stabilized polyolefin composition is obtained, by blending:

a) the polyolefin;
b) an effective amount of the hindered phenol antioxidant;
c) an effective amount of the phosphonite or phosphine antioxidant; and
d) an effective amount of the co-stabilizing synthetic or natural hydrotalcite.

In general, the components (b) to (d) can be blended with the polyolefin and distributed therein by melt compounding the components (a) to (d). Prior to melt compounding, all or a portion of the components may be dry blended to facilitate uniform distribution of the components (b) to (d) in the polyolefin. The components (b) to (d) can be added to the polyolefin separately or jointly, simultaneously or in succession.

In some of the embodiments, the components (b) to (d) are employed in form of one or more masterbatches.

In particular embodiments, the components (b) to (d) are employed in form of one of the stabilizer systems described hereinabove.

The components (b) to (d) are typically incorporated into the polyolefins in the amounts addressed in general and in particular in the foregoing with respect to the HDPE compositions, i.e.,

b) the hindered phenol antioxidant is employed in amounts of from 0.01 to 1.5%-wt., or 0.02 to 1.0%-wt., or 0.05 to 0.5 %-wt., based on the weight of the polyolefin;
c) the phosphonite or phosphine antioxidant is employed in amounts of from 0.01 to 1.5%-wt., or 0.02 to 1.0%-wt., or 0.02 to 0.5 %-wt., based on the weight of the polyolefin; and
d) the co-stabilizing synthetic or natural hydrotalcite is employed in amounts of from 0.01 to 5.0%-wt., or 0.01 to 2.5%-wt., or 0.01 to 1.0 %-wt., based on the weight of (a), of the polyolefin.

The amount in which the stabilizer system is blended with the HDPE will generally vary depending on the concentration of the stabilizer system, i.e., the presence or absence of a binder, and the amount of the binder which is present in the stabilizer system. When the stabilizer system is conditioned in form of one or more masterbatches the total amount of masterbatches incorporated into the polyolefin will typically range from 0.1 to 10%-wt., based on the weight of the polyolefin.

Correspondingly, the HDPE component (a) is stabilized, and the HDPE composition of the present disclosure is manufactured by blending:

a) the HDPE;
b) an effective amount of the hindered phenol antioxidant;
c) an effective amount of the phosphonite or phosphine antioxidant;
d) an effective amount of the co-stabilizing synthetic or natural hydrotalcite; and
e) optionally one or more additives different from components (b) to (d).

In general, the components (b) to (d), and optionally (e), can be blended with the HDPE and distributed therein by melt compounding the components. Prior to melt compounding, all or a portion of the components may be dry blended to facilitate uniform distribution of the components (b) to (d) and optionally (e) in the HDPE. The components (b) to (d), and optionally (e), can be added separately or jointly, simultaneously or in succession.

In some of the embodiments, the components (b) to (d), and optionally (e), are employed in form of one or more masterbatches.

In particular embodiments, the components (b) to (d), and the optional further additive(s) (e.5), (e.6), (e.10), (e.11), (e.12), (e.13), (e.14), (e.15), (e.16), and/or (e.17), are employed in form of one of the stabilizer systems described hereinabove.

The amount in which the stabilizer system is blended with the HDPE will generally vary depending on the concentration of the stabilizer system, i.e., the presence or absence of a binder, and the amount of the binder which is present in the stabilizer system. When the stabilizer system is conditioned in form of one or more masterbatches the total amount of masterbatches incorporated into the polyolefin will typically range from 0.1 to 10%-wt., based on the weight of the HDPE component (a).

It will be understood by those having skill in the art that the polyolefin or the HDPE which is employed in the method may be a commercial product which already includes certain amounts of antioxidants and/or stabilizers. In the event that one or more antioxidants or stabilizers which are present in the commercial product correspond to one or more of the components (b), (c), (d), and optionally (e), of the stabilizer system addressed herein, the amount of the respective component(s) of the stabilizer system can be adjusted accordingly.

## I) The Moldings

The HDPE composition in accordance with the present disclosure is generally suited for molding applications in which HDPE is normally employed. However, due to the improved resistance to deterioration upon long-term exposure to chlorinated and non-chlorinated water at temperatures in the range of 0 °C to 100 °C, the HDPE composition is especially suited for moldings which are exposed to such conditions in normal use such as, e.g., pipes, parts employed in pipe systems such as fittings, geotextiles, and the like.

In some embodiments, the HDPE composition may be in the form a pipe or an article used in a piping system. The pipes and other articles may be produced through extrusion along the long-axis of the pipe/article as well as profile extrusion where the pipe/article is formed in the circumferential direction. In particular example, fittings may be manufactured using molding processes such as injection molding as well as machining processes from extruded pipe or extruded solid rod stock.

When the HDPE composition is employed as a pipe material or a material for parts employed in pipe systems, in some embodiments the pipe or part consists essentially of, or consists of, the HDPE composition. In alternative

embodiments, the pipe or the part of the pipe system comprises two or more layers including an innermost polymer layer wherein at least the innermost layer consists essentially of, or consists of, the HDPE composition. The innermost layer in this context is to be understood as the part of the pipe surface which comes into direct contact with the media transported via the pipe, e.g., chlorinated and non-chlorinated water. Those having ordinary skill in the art will appreciate that layered pipe structures also include structures wherein the pipe or the part of the pipe system comprises at least three layers including an innermost and an outermost polymer layer wherein both the innermost and the outermost layer consists essentially of, or consists of, the HDPE composition. In some examples, multilayer structures can consist of the HDPE composition plus additional layers intended for reinforcement, barrier properties or other functions. The additional layers include non-polymeric materials, including but not limited to fiber glass, steel fiber, aluminum, etc., and the additional layers may also include other resins including the HDPE composition as well as other polymers and tie-layers to bind one layer to another.

When the HDPE composition is employed in articles such as geotextiles, the articles may consist essentially of, or consist of, the HDPE composition. In alternative embodiments, the HDPE composition may be employed together with other materials conventionally used for that purpose, i.e., natural or synthetic fibers.

EXAMPLES

The following examples further illustrate the compositions, systems, and methods. Those having ordinary skill will readily appreciate that the illustrations can be modified in accordance with the foregoing description within the spirit of the invention and the scope of the claims.

**A. Materials and Methods**

Oxidation Induction Time (OIT) was determined using TA Instruments Model 911001.902 connected to a computer running Thermal Advantage (T A) Universal Analysis 2000 (Windows 2000). The system was first calibrated with indium and tin before loading the sample and the reference pan into the cell. The samples and the reference were heated at a constant rate in an inert nitrogen environment. When the temperature reached 200 °C, the specimen was kept at 200°C for a period of 5 minutes before changing the gas flow to oxygen. The zero point of the induction period was the point at which the nitrogen flow was switched to oxygen. The end of the induction period was signaled by an abrupt increase in the samples' evolved heat or temperature as recorded by the DSC.

The illustrative and comparative samples were prepared by mixing the polyolefin component (A.1) and the respective additives in a twin-screw Leistritz 18 mm extruder (Ex. 1C and Ex. 2), or a Brabender mixer at 200°C (Ex. 3C and Ex. 4). The amounts (in ppm) and combinations of the additives employed in the respective samples were as set forth in Table 1.

**A.1**: a bimodal HDPE reactor powder comprising 1-3%-wt. of 1-butene, having a density of 0.946-0.949 g/cm$^3$, and an HLMI of 8-10 g/10 min.
**B.1**: tetrakis [methylene 3-(3',5'-di-tert-butyl-4-hydroxyphenyl)propionate]methane (Irganox● 1010)
**B.2:** n-octadecyl-beta-(4'-hydroxy-3',5'-di-tert-butylphenyl) propionate (Irganox● 1076)
**B.3:** 1,3,5-trimethyl-2,4,6-tris(3,5-di-tert-butyl-4-hydroxybenzyl) benzene (Irganox● 1330)
**B.4:** ethylene bis[3,3-bis(3-tert-butyl-4-hydroxyphenyl)butyrate] (Hostanox● 03)
**C.1:** tetrakis(2,4-di-tert-butylphenyl)-4,4'-biphenylene diphosphonite (Irgafos● P-EPQ)
**C.C-1:** tris(2,4-di-tert-butylphenyl)phosphite (Irgafos● 168)
**D.1**: hydrotalcite (DHT-4A)
**E.1**: calcium stearate
**E.2:** zinc stearate

Table 1:

| | **Ex. 1C*** | **Ex. 2** | **Ex. 3C*** | **Ex. 4** |
|---|---|---|---|---|
| B.1 | 1700 | -/- | -/- | -/- |
| B.2 | -/- | -/- | -/- | 500 |
| B.3 | -/- | 2500 | -/- | -/- |
| B.4 | -/- | -/- | 2500 | 1700 |
| C.1 | -/- | 500 | -/- | 500 |

(continued)

| | Ex. 1C* | Ex. 2 | Ex. 3C* | Ex. 4 |
|---|---|---|---|---|
| C.C-1 | 1450 | -/- | 1500 | -/- |
| D.1 | -/- | 2000 | -/- | 1500 |
| E.1 | 1000 | -/- | 1000 | 1000 |
| E.2 | 1000 | 500 | 1000 | 1000 |
| * Ex. 1C and 3C are comparative Samples | | | | |

After compounding, the compositions of Ex. 1C and Ex. 2 were used to produce test coupons having a thickness of 75 mils by compression molding. For aging experiments, an appropriate test coupon was placed into a jar filled with either deionized water or a chlorinated water solution. The jar was then placed into a circulating hot air oven whose temperature was set to 70 °C for a period of up to 26 weeks.

The chlorinated water solution was prepared by diluting 4.0 mL of an aqueous sodium hypochlorite solution having active sodium hypochlorite concentration of 5.25% to 2 L to obtain a solution contained approximately 100 ppm of active sodium hypochlorite.

Figure 1 shows the aging data for Ex. 1C and Ex. 2. The comparative composition of Ex. 1C initially exhibited a high OIT value. However, the OIT value of Ex. 1C decreased by more than 50% within 10 weeks. Contrastingly, the initial OIT value of the composition Ex. 2 was only 50% of the initial OIT value of Ex. 1C. However, the OIT value of the composition comprising the stabilizer system in accordance with the present disclosure did not decrease much over the span of 26 weeks.

The aging data shown in Figure 1 were fit to a first-order kinetic model,

$$OIT_t = OIT_{t=0} \exp(-kt),$$

where $O1T_t$ is the O1T value at the time t, $O1T_{t=0}$ is the initial O1T value of the unaged sample, k constant, and t is the elapsed time, the results of this model were then used to predict the time required for the OIT value to reach depletion (using 0.01 minutes OIT as the criterion). The results of this prediction are shown Figure 2 and indicate that the retention of the OIT value of Ex. 2 in accordance with the present disclosure is better by a factor of 6 than the OIT retention of the comparative composition Ex. 1C.

Additionally, it was observed that the composition of Ex. 2 retained its color considerably better than the composition of Ex. 1C during aging.

The compositions of Ex. 3C and Ex. 4 were extruded into a 10 mil thick and 6 inch wide sheet. Samples were taken from this sheet and aged at 60 °C in 100 ppm sodium hypochlorite solution for 8 weeks corresponding to the description above. The aging data are shown in Figure 3.

Figure 3 shows that the hindered phenol antioxidant B.4 improves the OIT retention in HDPE under accelerated aging conditions. However, aging of the composition of Ex. 3C was accompanied by a significant degradation of the molecular weight distribution of the HDPE as shown in Figure 4. Contrastingly, as shown in Figure 5, the molecular weight distribution of the HDPE in the composition of Ex. 4 in accordance with the present disclosure was by far less affected by the accelerated aging conditions.

## Claims

1. A high-density polyethylene (HDPE) composition in the form of a pipe having improved resistance to deterioration in the presence of chlorinated and non-chlorinated water at temperatures in the range of 0 °C to 100 °C and consisting essentially of:

   a) the HDPE;
   b) an effective amount of a hindered phenol antioxidant;
   c) an effective amount of a phosphonite or phosphine antioxidant;
   d) an effective amount of a co-stabilizing synthetic or natural hydrotalcite; and
   e) optionally one or more additives different from components (b) to (d).

**2.** The HDPE composition of claim 1 in the form of a pipe, consisting essentially of:

a) the HDPE;
b) from 0.05 to 0.5 %-wt., based on the weight of (a), of the hindered phenol antioxidant;
c) from 0.02 to 0.5 %-wt., based on the weight of (a), of the phosphonite or phosphine antioxidant;
d) from 0.01 to 1.0 %-wt., based on the weight of (a), of the co-stabilizing synthetic or natural hydrotalcite; and
e) optionally one or more additives different from components (b) to (d), in each case in amounts of from 0.01 to 3.0 %-wt., based on the weight of (a).

**3.** The HDPE composition of claim 1 in the form of a pipe, wherein the HDPE (a) meets at least one of the following provisions ($a_1$) to ($a_3$):

$a_1$) the HDPE has a molecular weight distribution which is at least bimodal; and/or
$a_2$) the HDPE has a density of $\geq$ 0.946 g/cm$^3$, a HLMI of $\leq$ 20 g/10 min.; and/or
$a_3$) the HDPE has at least one polyethylene resin fraction having a density of $\geq$ 0.965 g/cm$^3$ and an $MI_2$ of from 50-400 g/10 min.

**4.** The HDPE composition of claim 1 in the form of a pipe, wherein the hindered phenol antioxidant (b) is a hindered phenol of formula (I)

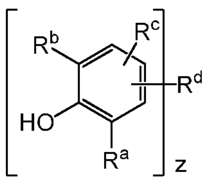

(I)

wherein

z is an integer from 1 to 4;
$R^a$ is a secondary or tertiary $C_3$-$C_6$-alkyl group, a $C_3$-$C_6$-cycloalkyl group, or a phenyl group;
$R^b$ is hydrogen, a $C_1$-$C_6$-alkyl group, a $C_3$-$C_6$-cycloalkyl group, or a phenyl group;
$R^c$ is hydrogen or a $C_1$-$C_6$-alkyl group, and
$R^d$ is $(CH_2)_2$-$CO_2$-$C_{18}H_{37}$ (z = 1) or is one of the polyvalent radicals $R^{d1}$ to $R^{d10}$

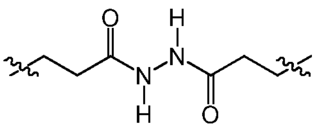

($R^{d1}$) z = 2

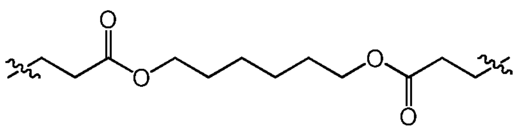

($R^{d2}$) z = 2

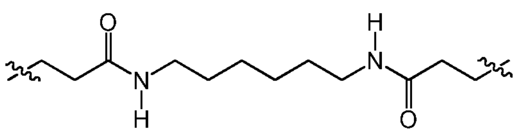

($R^{d3}$) z = 2

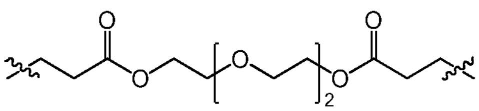

($R^{d4}$) z = 2

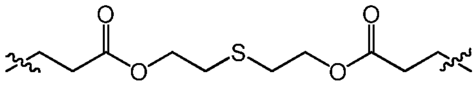

($R^{d5}$) z = 2

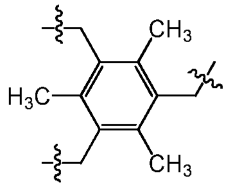

($R^{d6}$) z = 3

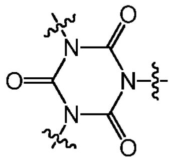

($R^{d7}$) z = 3

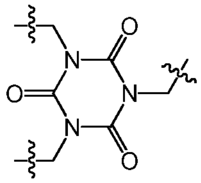

($R^{d8}$) z = 3

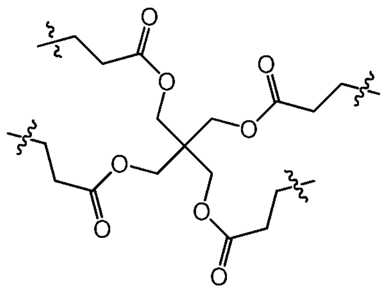

($R^{d9}$) z = 4

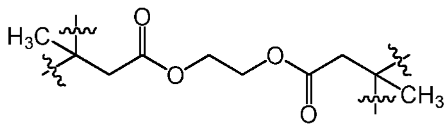

($R^{d10}$) z = 4.

**5.** The HDPE composition of claim 1 in the form of a pipe, wherein the phosphonite or phosphine antioxidant (c) is a phosphonite or phosphine of formula (II)

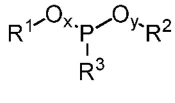

(II)

wherein

x and y, independently of one another, are 0 or 1;
$R^1$ and $R^2$, independently of one another, are unsubstituted or alkyl-substituted aryl groups; and
$R^3$ is an aryl group which is unsubstituted or which carries one or more alkyl groups and/or a $-P[O_mR^4]_2$ group wherein each m independently is 0 or 1, and each $R^4$ independently is an unsubstituted or alkyl-substituted aryl group.

**6.** The HDPE composition of claim 1 in the form of a pipe, wherein the hydrotalcite (c) is a mixed hydroxide of formula

(IIIa) or (IIIb)

$$M^{2+}{}_{1-a}M^{3+}{}_{a}(OH)_2(A^{b-})_{a/b}\times cH_2O \qquad (IIIa)$$

$$M^{2+}{}_{d}Al^{3+}{}_{2}(OH)_{2d+6-eb}(A^{b-})_{e}\times fH_2O \qquad (IIIb)$$

wherein

$M^{2+}$ is $Ca^{2+}$, $Mg^{2+}$, $Sr^{2+}$, $Ba^{2+}$, $Zn^{2+}$, $Pb^{2+}$, $Sn^{2+}$, or $Ni^{2+}$,
$M^{3+}$ is $Al^{3+}$, $B^{3+}$, or $Bi^{3+}$,
a is a number up to 0.5;
$A^b$ is an anion of valency b;
b is an integer from 1 to 4;
c is zero or a number up to 2;
d is a number up to 6;
e is a number up to 2; and
f is zero or a number up to 15.

**7.** The HDPE composition of claim 1 in the form of a pipe comprising one or more additives (e) selected from the group consisting of UV absorbers, light stabilizers, metal deactivators, peroxide scavengers, polyamide stabilizers, basic co-stabilizers, nucleating agents, fillers, reinforcing agents, aminoxy propanoate derivatives, lubricants, pigments, optical brighteners, anti-static agents, processing aids, tracers, waxes, melt strength enhancers, and anti-scratch additives.

**8.** The HDPE composition of claim 1 in the form of a pipe which is essentially free of amine antioxidants.

**9.** The HDPE composition of claim 1 in the form of a pipe which is essentially free of amine stabilizers.

**10.** The HDPE composition of claim 1, wherein the composition is in the form of a pipe wherein the pipe is suitable for carrying potable chlorinated or non-chlorinated water of a temperature in the range of 0 °C to 100 °C having two or more layers including one innermost polymer layer wherein the innermost polymer layer consists essentially of the HDPE composition of claim 1.

## Patentansprüche

**1.** Polyethylen mit hoher Dichte (HDPE)-Zusammensetzung in Form eines Rohres mit erhöhter Zersetzungsbeständigkeit in Gegenwart von gechlortem und ungechlortem Wasser bei Temperaturen im Bereich von 0 °C bis 100 °C, und im Wesentlichen bestehend aus:

a) dem HDPE;
b) einer effektiven Menge an gehindertem Phenol-Antioxidans;
c) einer effektiven Menge an Phosphonit- oder Phosphin-Antioxidans;
d) einer effektiven Menge eines costabilisierenden synthetischen oder natürlichen Hydrotalkits; und
e) gegebenenfalls einem oder mehreren Additiven, die sich von Komponenten (b) bis (d) unterscheiden.

**2.** HDPE-Zusammensetzung nach Anspruch 1 in Form eines Rohres, im Wesentlichen bestehend aus:

a) dem HDPE;
b) 0,05 bis 0,5 Gew.%. von dem gehinderten Phenol-Antioxidans, bezogen auf das Gewicht von (a);
c) 0,02 bis 0,5 Gew.%. von dem Phosphonit- oder Phosphin-Antioxidans, bezogen auf das Gewicht von (a);
d) 0,01 bis 1,0 Gew.%. von dem costabilisierenden synthetischen oder natürlichen Hydrotalkit, bezogen auf das Gewicht von (a); und
e) gegebenenfalls einem oder mehreren Additiven, die sich von den Komponenten (b) bis (d) unterscheiden, in jedem Fall in Mengen von 0,01 bis 3,0 Gew.%, bezogen auf das Gewicht von (a).

**3.** HDPE-Zusammensetzung nach Anspruch 1 in Form eines Rohres, wobei das HDPE (a) mindestens eine der folgenden Maßgaben ($a_1$) bis ($a_3$) erfüllt:

$a_1$) das HDPE hat eine Molekulargewichtsverteilung, die mindestens bimodal ist; und/oder
$a_2$) das HDPE hat eine Dichte $\geq$ 0,946 g/cm$^3$, einen HLMI $\leq$ 20 g/10 min.; und/oder
$a_3$) das HDPE hat mindestens eine Polyethylenharzfraktion mit einer Dichte $\geq$ 0,965 g/cm$^3$ und einem $MI_2$ von 50-400 g/10 min.

**4.** HDPE-Zusammensetzung nach Anspruch 1 in Form eines Rohres, wobei das gehinderte Phenol-Antioxidans (b) ein gehindertes Phenol mit der Formel (I) ist:

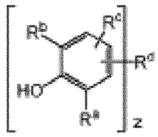

(I)

wobei

z eine ganze Zahl von 1 bis 4 ist;
$R^a$ eine sekundäre oder tertiäre $C_3$-$C_6$-Alkylgruppe, eine $C_3$-$C_6$-Cycloalkylgruppe oder eine Phenylgruppe ist;
$R^b$ Wasserstoff, eine $C_1$-$C_6$-Alkylgruppe, eine $C_3$-$C_6$-Cycloalkylgruppe oder eine Phenylgruppe ist;
$R^c$ Wasserstoff oder eine $C_1$-$C_6$-Alkylgruppe ist, und
$R^d$ $(CH_2)_2$-$CO_2$-$C_{18}H_{37}$ (z = 1) ist, oder einer der mehrwertigen Reste $R^{d1}$ bis $R^{d10}$ ist:

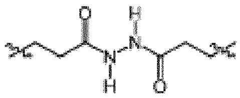

($R^{d1}$) z = 2

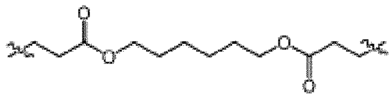

($R^{d2}$) z = 2

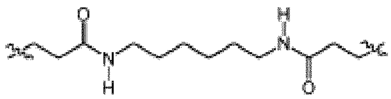

($R^{d3}$) z = 2

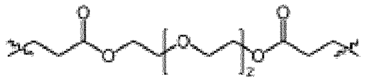

($R^{d4}$) z = 2

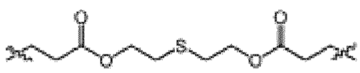

($R^{d5}$) z = 2

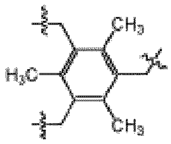

($R^{d6}$) z = 3

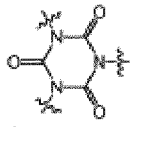

($R^{d7}$) z = 3

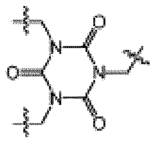

($R^{d8}$) z = 3

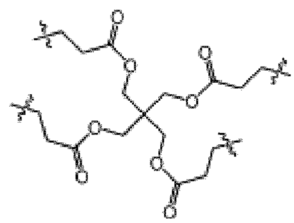

($R^{d9}$) z = 4

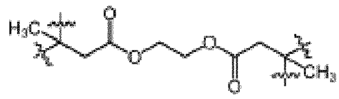

($R^{d10}$) z = 4.

**5.** HDPE-Zusammensetzung nach Anspruch 1 in Form eines Rohres, wobei das Phosphonit- oder Phosphin-Antioxidans (c) ein Phosphonit oder Phosphin mit der Formel (II) ist:

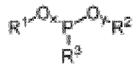

(II)

wobei

x und y unabhängig voneinander 0 oder 1 sind;
$R^1$ und $R^2$ unabhängig voneinander unsubstituierte oder alkylsubstituierte Arylgruppen sind; und
$R^3$ eine Arylgruppe ist, die unsubstituiert ist oder die eine oder mehrere Alkylgruppen und/oder eine Gruppe $-P[O_mR^4]_2$ trägt, wobei jedes m unabhängig 0 oder 1 ist und jedes $R^4$ unabhängig eine unsubstituierte oder alkylsubstituierte Arylgruppe ist.

**6.** HDPE-Zusammensetzung nach Anspruch 1 in Form eines Rohres, wobei das Hydrotalkit (c) ein gemischtes Hydroxid mit der Formel (IIIa) oder (IIIb) ist:

$$M^{2+}{}_{1-a}M^{3+}{}_a(OH)_2(A^{b-})_{a/b}\times cH_2O \quad \text{(IIIa)}$$

$$M^{2+}{}_dAl^{3+}{}_2(OH)_{2d+6-eb}(A^{b-})_e\times fH_2O \quad \text{(IIIb)}$$

wobei

$M^{2+}$ $Ca^{2+}$, $Mg^{2+}$, $Sr^{2+}$, $Ba^{2+}$, $Zn^{2+}$, $Pb^{2+}$, $Sn^{2+}$ oder $Ni^{2+}$ ist,
$M^{3+}$ $Al^{3+}$, $B^{3+}$ oder $Bi^{3+}$ ist,
a eine Zahl bis 0,5 ist;
$A^b$ ein Anion mit der Wertigkeit b ist;
b eine ganze Zahl von 1 bis 4 ist;
c Null oder eine Zahl bis 2 ist;
d eine Zahl bis 6 ist;
e eine Zahl bis 2 ist; und
f Null oder eine Zahl bis 15 ist.

**7.** HDPE-Zusammensetzung nach Anspruch 1 in Form eines Rohres, umfassend ein oder mehrere Additive (e) ausgewählt aus der Gruppe bestehend aus UV-Absorbentien, Lichtstabilisatoren, Metalldeaktivatoren, Peroxidabfangmitteln, Polyamidstabilisatoren, basischen Costabilisatoren, Nukleierungsmitteln, Füllstoffen, Verstärkungsmitteln, Aminoxypropanoatderivaten, Schmiermitteln, Pigmenten, optischen Aufhellern, Antistatikmitteln, Verarbeitungshilfsmitteln, Tracern, Wachsen, Schmelzfestigkeiterhöhungsmitteln und Antikratzadditiven.

**8.** HDPE-Zusammensetzung nach Anspruch 1 in Form eines Rohres, die im Wesentlichen frei von Amin-Antioxidantien ist.

**9.** HDPE-Zusammensetzung nach Anspruch 1 in Form eines Rohres, die im Wesentlichen frei von Amin-Stabilisatoren ist.

**10.** HDPE-Zusammensetzung nach Anspruch 1, wobei die Zusammensetzung in Form eines Rohres vorliegt, wobei das Rohr geeignet zum Führen von trinkbarem chloriertem oder unchloriertem Wasser mit einer Temperatur im Bereich von 0 °C bis 100 °C ist, mit zwei oder mehr Schichten, die eine innerste Polymerschicht einschließen, wobei die innerste Polymerschicht im Wesentlichen aus der HDPE-Zusammensetzung gemäß Anspruch 1 besteht.

**Revendications**

**1.** Composition de polyéthylène haute densité (PEHD) sous la forme d'un tuyau ayant une résistance améliorée à la détérioration en présence d'eau chlorée et non chlorée à des températures dans la plage de 0 °C à 100 °C et consistant essentiellement en :

a) le PEHD ;
b) une quantité efficace d'un antioxydant phénolique à encombrement stérique ;
c) une quantité efficace d'un antioxydant phosphonite ou phosphine ;
d) une quantité efficace d'une hydrotalcite synthétique ou naturelle co-stabilisante ; et
e) éventuellement un ou plusieurs additifs différents des composants (b) à (d).

**2.** Composition de PEHD de la revendication 1 sous la forme d'un tuyau, consistant essentiellement en :

a) le PEHD ;
b) de 0,05 à 0,5 % en poids, sur la base du poids de (a), de l'antioxydant phénol à encombrement stérique ;
c) de 0,02 à 0,5 % en poids, sur la base du poids de (a), de l'antioxydant phosphonite ou phosphine ;
d) de 0,01 à 1,0 % en poids, sur la base du poids de (a), de l'hydrotalcite synthétique ou naturelle co-stabilisante ; et
e) éventuellement un ou plusieurs additifs différents des composants (b) à (d), dans chaque cas dans des quantités de 0,01 à 3,0 % en poids, sur la base du poids de (a).

**3.** Composition de PEHD de la revendication 1 sous la forme d'un tuyau, dans laquelle le PEHD (a) satisfait au moins l'une des dispositions suivantes ($a_1$) à ($a_3$) :

$a_1$) le PEHD a une distribution des poids moléculaires qui est au moins bimodale ; et/ou
$a_2$) le PEHD a une masse volumique $\geq$ 0,946 g/cm$^3$, un HLMI $\leq$ 20 g/10 min ; et/ou
$a_3$) le PEHD a au moins une fraction de résine de polyéthylène ayant une masse volumique $\geq$ 0,965 g/cm$^3$ et un $MI_2$ de 50 à 400 g/10 min.

**4.** Composition de PEHD de la revendication 1 sous la forme d'un tuyau, dans laquelle l'antioxydant phénol à encombrement stérique (b) est un phénol à encombrement stérique de formule (I)

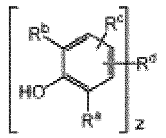

(I)

dans laquelle

z est un nombre entier de 1 à 4 ;
$R^a$ est un groupe alkyle en $C_3$-$C_6$ secondaire ou tertiaire, un groupe cycloalkyle en $C_3$-$C_6$ ou un groupe phényle ;
$R^b$ est l'hydrogène, un groupe alkyle en $C_1$-$C_6$, un groupe cycloalkyle en $C_3$-$C_6$ ou un groupe phényle ;
$R^c$ est l'hydrogène ou un groupe alkyle en $C_1$-$C_6$, et
$R^d$ est $(CH_2)_2$-$CO_2$-$C_{18}H_{37}$ (z = 1) ou est l'un des radicaux polyvalents $R^{d1}$ à $R^{d10}$

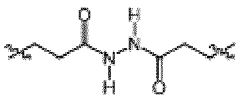

$(R^{d1})$ z = 2

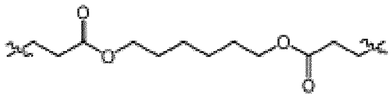

$(R^{d2})$ z = 2

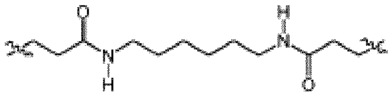

$(R^{d3})$ z = 2

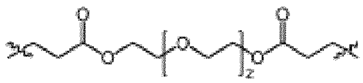

$(R^{d4})$ z = 2

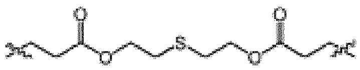

$(R^{d5})$ z = 2

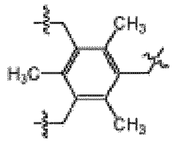

$(R^{d6})$ z = 3

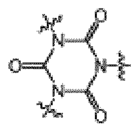

$(R^{d7})$ z = 3

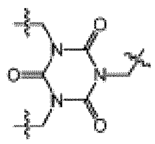

$(R^{d8})$ z = 3

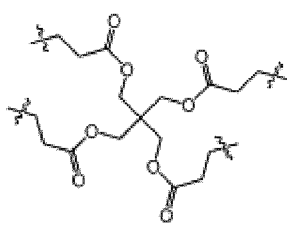

$(R^{d9})$ z = 4

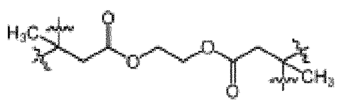

$(R^{d10})$ z = 4.

**5.** Composition de PEHD de la revendication 1 sous la forme d'un tuyau, dans laquelle l'antioxydant phosphonite ou phosphine (c) est un phosphonite ou une phosphine de formule (II)

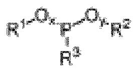 (II)

dans laquelle

x et y, indépendamment l'un de l'autre, sont 0 ou 1 ;
$R^1$ et $R^2$, indépendamment l'un de l'autre, sont des groupes aryle non substitués ou substitués par alkyle ; et
$R^3$ est un groupe aryle qui est non substitué ou qui porte un ou plusieurs groupes alkyle et/ou un groupe $-P[O_mR^4]_2$ dans lequel chaque m est indépendamment 0 ou 1, et chaque
$R^4$ est indépendamment un groupe aryle non substitué ou substitué par alkyle.

**6.** Composition de PEHD de la revendication 1 sous la forme d'un tuyau, dans laquelle l'hydrotalcite (c) est un hydroxyde mixte de formule (IIIa) ou (IIIb)

$$M^{2+}{}_{1-a}M^{3+}{}_{a}(OH)_2(A^{b-})_{a/b} \times cH_2O \qquad (IIIa)$$

$$M^{2+}{}_{d}Al^{3+}{}_{2}(OH)_{2d+6-eb}(A^{b-})_{e} \times tH_2O \qquad (IIIb)$$

dans lesquelles

$M^{2+}$ est $Ca^{2+}$, $Mg^{2+}$, $Sr^{2+}$, $Ba^{2+}$, $Zn^{2+}$, $Pb^{2+}$, $Sn^{2+}$, ou $Ni^{2+}$,
$M^{3+}$ est $Al^{3+}$, $B^{3+}$, ou $Bi^{3+}$,
a est un nombre allant jusqu'à 0,5 ;
$A^b$ est un anion de valence b ;
b est un nombre entier de 1 à 4 ;
c est zéro ou un nombre allant jusqu'à 2 ;
d est un nombre allant jusqu'à 6 ;
e est un nombre allant jusqu'à 2 ; et
f est zéro ou un nombre allant jusqu'à 15.

**7.** Composition de PEHD de la revendication 1 sous la forme d'un tuyau comprenant un ou plusieurs additifs (e) choisis dans le groupe constitué par les absorbeurs UV, les stabilisants de lumière, les désactivateur de métaux, les capteurs de peroxyde, les stabilisants de polyamide, les co-stabilisants basiques, les agents de nucléation, les charges, les agents de renforcement, les dérivés aminoxy propanoate, les lubrifiants, les pigments, les azurants optiques, les agents antistatiques, les auxiliaires de traitement, les traceurs, les cires, les amplificateurs de résistance à l'état fondu et les additifs anti-rayures.

**8.** Composition de PEHD de la revendication 1 sous la forme d'un tuyau qui est essentiellement exempte d'antioxydants amine.

**9.** Composition de PEHD de la revendication 1 sous la forme d'un tuyau qui est essentiellement exempte de stabilisants amine.

**10.** Composition de PEHD de la revendication 1, la composition se présentant sous la forme d'un tuyau, le tuyau étant approprié pour transporter de l'eau potable chlorée ou non chlorée d'une température dans la plage de 0 °C à 100 °C ayant au moins deux couches comprenant une couche de polymère la plus à l'intérieur, la couche de polymère la plus à l'intérieur consistant essentiellement en la composition de PEHD de la revendication 1.

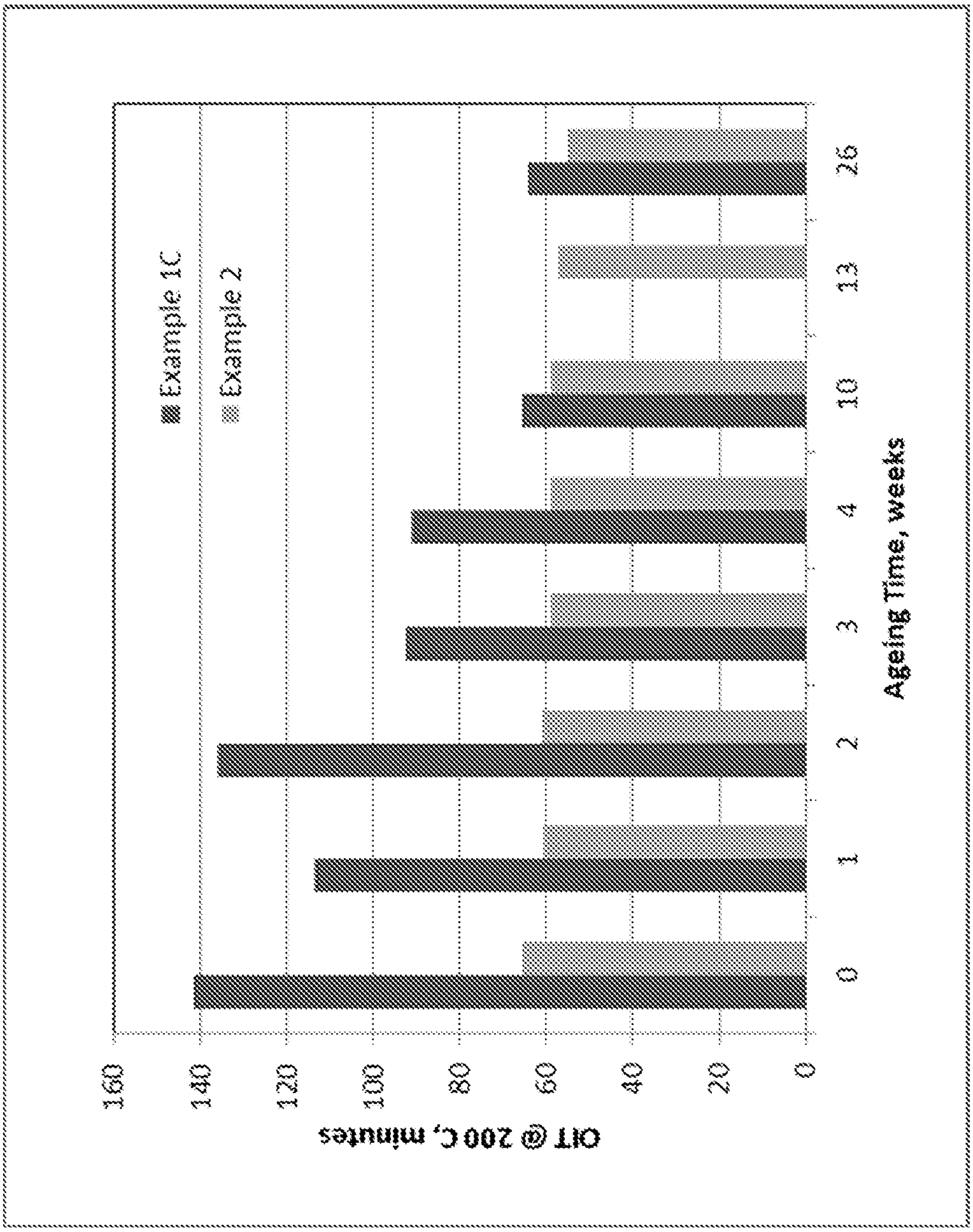
Example 1C
Example 2
OIT @ 200 C, minutes
160
140
120
100
80
60
40
20
0
0
1
2
3
4
10
13
26
Ageing Time, weeks

Figure 1

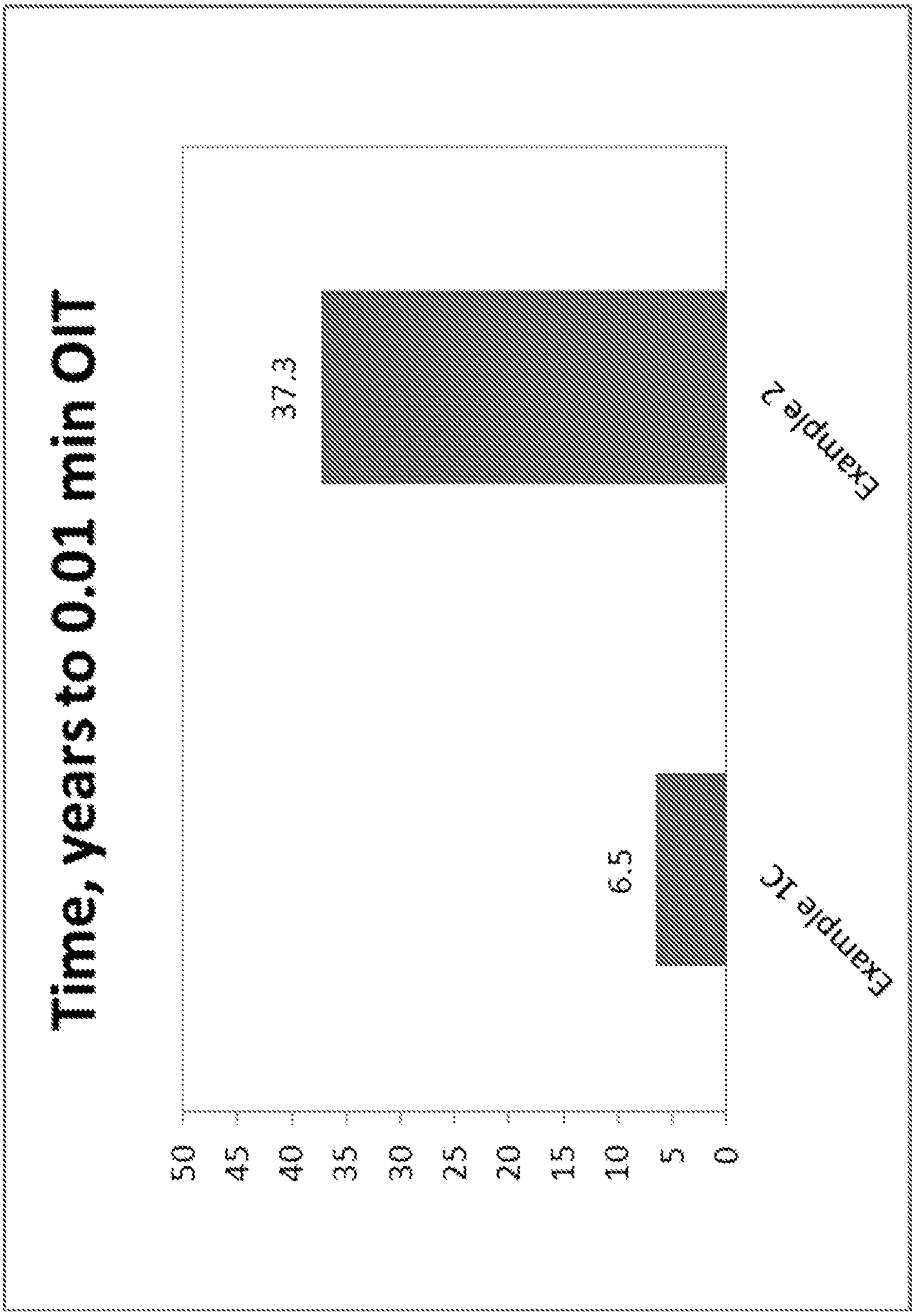

Time, years to 0.01 min OIT
50
45
40
35
30
25
20
15
10
5
0
6.5
37.3
Example 1C
Example 2


Figure 2

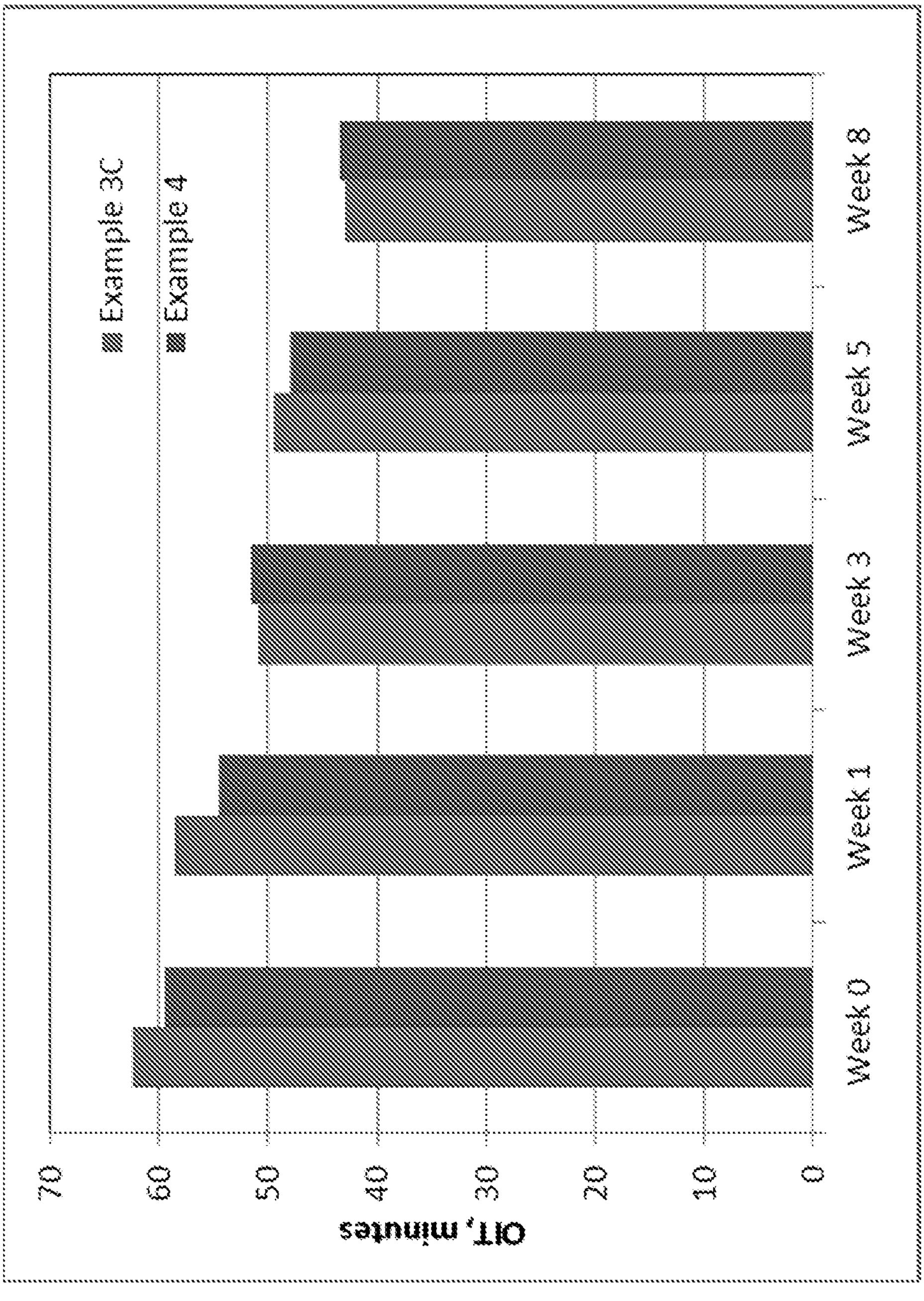
Example 3C
Example 4
OIT, minutes
70
60
50
40
30
20
10
0
Week 0
Week 1
Week 3
Week 5
Week 8

Figure 3

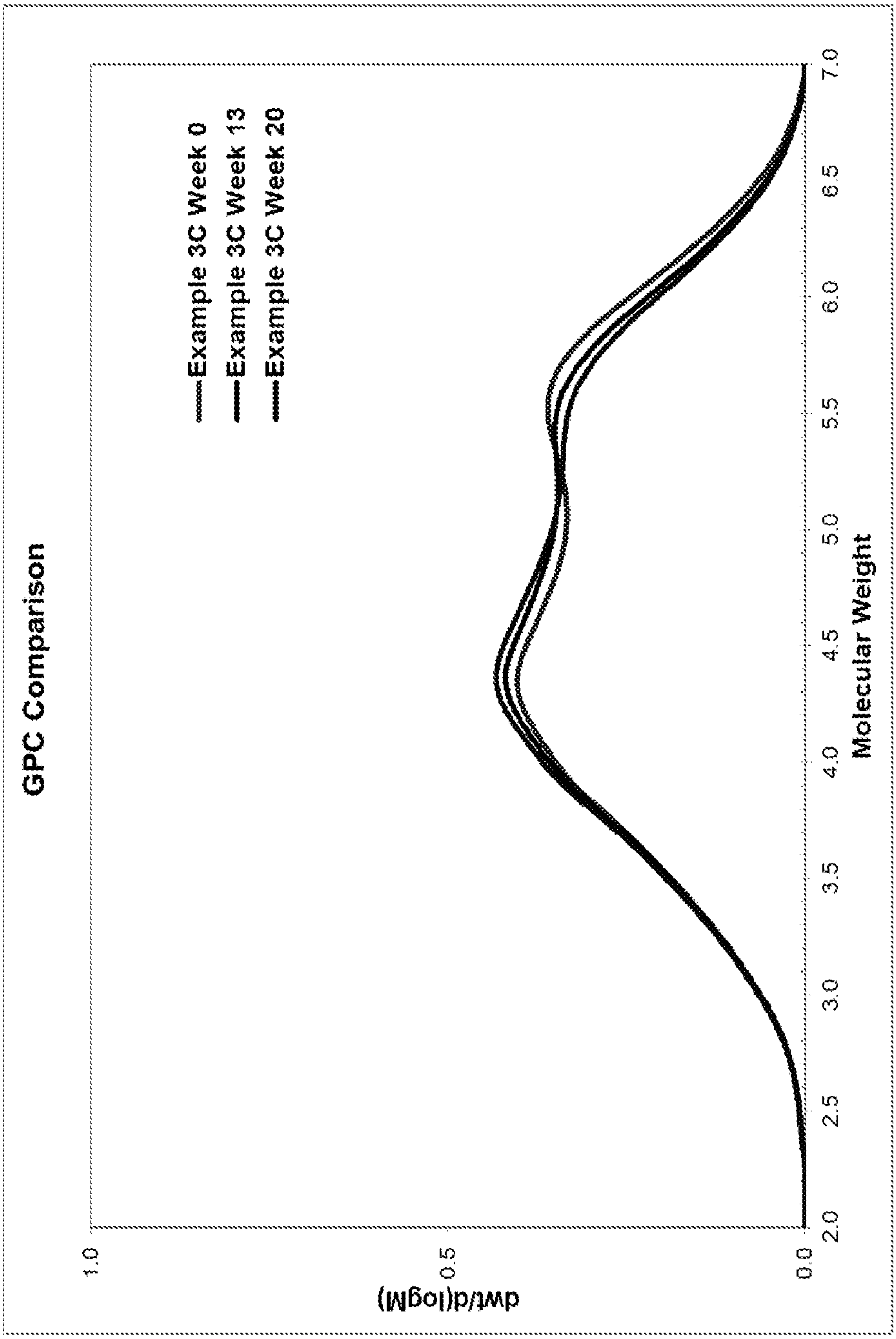
GPC Comparison
dwt/d(logM)
1.0
0.5
0.0
2.0
2.5
3.0
3.5
4.0
4.5
5.0
5.5
6.0
6.5
7.0
Molecular Weight
Example 3C Week 0
Example 3C Week 13
Example 3C Week 20

Figure 4

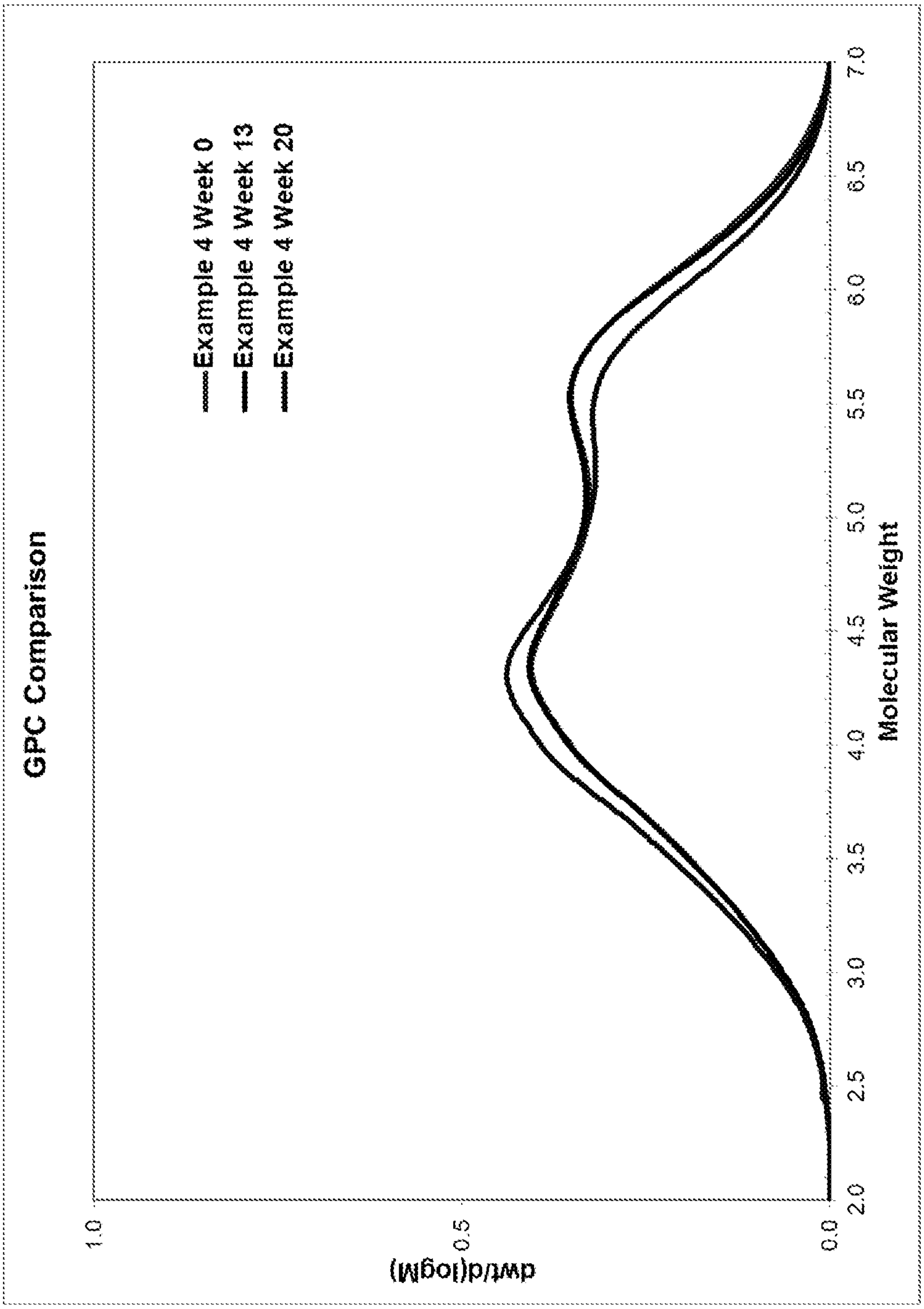
GPC Comparison
Example 4 Week 0
Example 4 Week 13
Example 4 Week 20
dwt/d(logM)
1.0
0.5
0.0
2.0
2.5
3.0
3.5
4.0
4.5
5.0
5.5
6.0
6.5
7.0
Molecular Weight

Figure 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 67222212 A
- US 20030073768 A
- US 6541457 B
- US 20060264540 A
- US 20080221242 A
- US 7230054 B
- US 7193017 B
- US 7129296 B
- US 7037977 B
- US 7034092 B
- US 6946521 B
- US 6878784 B
- US 6867278 B
- US 6787608 B
- US 6770341 B
- US 6566450 B
- US 6525148 B
- US 6252017 B
- US 20090304966 A
- US 20100092709 A
- WO 2007003530 A
- WO 9118934 A
- US 3518312 A
- US 3825629 A
- US 4209468 A
- US 5703150 A
- GB 2215727 A
- US RE34164 E
- US 4904457 A